(19) Europäisches Patentamt
European Patent Office
Office européen des brevets

(11) EP 3 694 944 B1

(12) EUROPÄISCHE PATENTSCHRIFT

(45) Veröffentlichungstag und Bekanntmachung des Hinweises auf die Patenterteilung:
**24.04.2024 Patentblatt 2024/17**

(21) Anmeldenummer: **18773476.9**

(22) Anmeldetag: **28.09.2018**

(51) Internationale Patentklassifikation (IPC):
***C09J 7/38*** *(2018.01)* ***C09J 7/50*** *(2018.01)*
***C09D 175/04*** *(2006.01)* ***C09J 133/04*** *(2006.01)*

(52) Gemeinsame Patentklassifikation (CPC):
**C09J 7/385; C09D 175/04; C09J 7/50; C09J 133/04;** C08G 2170/20; C09J 2203/306; C09J 2301/416; C09J 2423/006; C09J 2423/046; C09J 2423/106; C09J 2433/00; C09J 2475/003

(86) Internationale Anmeldenummer:
**PCT/EP2018/076425**

(87) Internationale Veröffentlichungsnummer:
**WO 2019/072590 (18.04.2019 Gazette 2019/16)**

# (54) SCHUTZFOLIEN, HERGESTELLT AUS POLYOLEFINTRÄGERMATERIAL, PRIMER UND STRAHLUNGSVERNETZBAREM SCHMELZKLEBSTOFF

PROTECTIVE FILMS MADE OF POLYOLEFIN SUPPORT MATERIAL, PRIMER AND RADIATION-CROSSLINKABLE HOT MELT ADHESIVE

FILMS PROTECTEURS PRODUITS À PARTIR D'UN MATÉRIAU SUPPORT POLYOLÉFINIQUE, D'UNE COUCHE DE FOND ET D'UN ADHÉSIF THERMOFUSIBLE RÉTICULABLE SOUS L'EFFET D'UN RAYONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2017 EP 17195900**

(43) Veröffentlichungstag der Anmeldung:
**19.08.2020 Patentblatt 2020/34**

(73) Patentinhaber: **BASF SE**
**67056 Ludwigshafen am Rhein (DE)**

(72) Erfinder:
- **WULFF, Dirk**
  **67056 Ludwigshafen (DE)**
- **KERN, Holger**
  **67056 Ludwigshafen (DE)**
- **GERST, Matthias**
  **67056 Ludwigshafen (DE)**
- **KIENER, Christoph**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
**EP-A2- 2 541 105** **WO-A1-2012/168208**
**DE-A1-102012 218 335** **JP-A- 2006 182 652**

- **Anonymous: "Chemlok 459X-Grundierung", , 1 October 2020 (2020-10-01), pages 1-2, XP093070819, Retrieved from the Internet: URL:https://www.parker.com/Literature/Elastomer%20Process%20Materials%20Division/PDF %20uploads/Datasheet%20-%20Chemlok%20459X% 20Primer%20(German)%20DS3145G.pdf [retrieved on 2023-08-04]**
- **KARL-FRIEDRICH ARNDT ET AL: "4 Molmasse und Molmassenbestimmung", 1 January 1996 (1996-01-01), POLYMERCHARAKTERISIERUNG, CARL HANSER VERLAG, MÜNCHEN WIEN, PAGE(S) 92-107, XP002583664, ISBN: 978-3-446-17588-4 * page 98; table 4.1 ***

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 694 944 B1

## Beschreibung

Die Erfindung betrifft Schutzfolien, umfassend ein Polyolefinträgermaterial, eine Vorbeschichtung des Polyolefinträgermaterials mit einem Primer und eine Haftklebstoffschicht eines strahlungsvernetzten Schmelzklebstoffs.

Schutzfolien werden im allgemeinen auf Substratoberflächen von unterschiedlichster chemischer Art geklebt, um diese kurzzeitig bei Transport oder Lagerung vor Schäden durch chemische oder physikalische Einflüsse zu bewahren. Verwendung finden Schutzfolien auch z.B. bei großflächigen, geformten Substraten wie Automobilen oder sonstigen Verkaufsprodukten aus Metall (z.B. gebürstetem Stahl), Glas oder Kunststoff, z.B. elektronische Geräte, Bildschirme, Fensterrahmen aus Kunststoff (z.B. PVC). Schutzfolien bestehen in der Regel aus einem Trägermaterial, häufig Polyolefinfolien, das mit einem Klebstoff beschichtet ist.

Die Schutzfolien sollen leicht wiederabziehbar sein, wobei der Klebstoff der Schutzfolie nach dem Wiederabziehen möglichst vollständig auf dem Folienmaterial verbleiben sollte und möglichst keine Rückstände auf dem Substrat hinterlassen sollte, d.h. es sollte beim Wiederabziehen ein Adhäsionsbruch zwischen Substratoberfläche und Klebstoffschicht erfolgen. Es ist also eine möglichst gute Verankerung des Haftklebstoffes auf dem wiederabziehbaren Polyolefinträgermaterial bei gleichzeitig rückstandsfreiem Abzugsverhalten von möglichst unterschiedlichen Untergründen gewünscht. Zur Verbesserung der Verankerung erfolgt eine Oberflächenvorbehandlung der Polyolefinfolien z.B. durch Corona-Behandlung oder Plasmavorbehandlung vor Beschichtung mit dem Haftklebstoff. Außerdem ist eine möglichst konstante und nicht zu hohe Abzugskraft (Schälfestigkeit) auch nach Alterung gewünscht.

Als Klebstoff für Schutzfolien werden in der Regel Haftklebstoffe verwendet. Bekannt sind Haftklebstoffe für Schutzfolien in Form von Lösungen von Klebstoffpolymeren oder Kautschuk in organischen Lösungsmitteln oder in Form von wässrigen Polymerdispersionen. Die Polymerlösungen oder wässrigen Polymerdispersionen werden auf die Polyolefinträgerfolie beschichtet und es ist ein zusätzlicher Trocknungsschritt zur Entfernung von Lösungsmittel bzw. Wasser erforderlich. Gewünscht sind daher wasser- und lösemittelfreie Haftklebstoffe. Insbesondere Kautschuklösungen zeigen eine gute Verankerung des Klebstoffs auf Polyolefinfolien aus drei Gründen: i) auf natürlichem oder synthetischem Kautschuk basierende Klebstoffe (z.B. Polyisopren) gehören chemisch zur Klasse der Polyolefine, genauso wie die Trägermaterialien von Schutzfolien, die häufig aus Polyethylen, Polypropylen oder deren Gemisch bestehen, ii) Kautschuke werden mit Vernetzern abgemischt, welche auch mit der Corona- oder Plasma-vorbehandelten Polyolefinfolie reagieren und somit die Verankerung erhöhen. Bekannte Vernetzersysteme für Kautschuke sind Schwefel oder Schwefel-abspaltende Verbindungen, Phenol-Formaldehydharze, Di- oder Polyamine oder Di oder Polyhydrazine sowie Di- oder Poly-isocyanate, wobei im Bereich der Schutzfolien Letztere bevorzugt zur Anwendung kommen. iii) das organische Lösungsmittel der Klebstofflösungen quellt die Polyolefinfolie und ermöglicht so ein Eindiffundieren der Polyisoprenketten in das Trägermaterial. Nach Entfernen des Lösungsmittels verbleiben die eindiffundierten Polymerketten im Trägermaterial. Die Verwendung von organischen Lösungsmitteln ist aus ökologischen Gründen zunehmend unerwünscht. Lösemittelfreie Schmelzhaftklebstoffe haben gegenüber auf Lösemittel basierenden Systemen ein besseres ökologisches Profil. Schmelzhaftklebstoffe auf Basis von Polyacrylaten haben allerdings gegenüber auf Kautschuk basierten Klebstofflösungen den Nachteil, dass die Verankerung auf Polyolefinfolien häufig unzureichend ist für rückstandsfrei wiederabziehbare Schutzfolienanwendungen, weil kein oder nur sehr wenig Eindiffundieren von Polyacrylatketten in eine Polyolefinfolie erfolgt, was zu Rückständen auf dem Substrat führen kann, wenn die Schutzfolie vom Substrat abgelöst wird. Dem Fachmann ist bekannt, dass eine bessere Haftung auf Polyolefinfolien erreicht werden kann durch Oberflächenbehandlung der Folien, z.B. durch Corona-Behandlung, Plasmavorbehandlung oder Beschichtung mit einem Primer. Es hat sich aber gezeigt, dass diese Vorbehandlungen im Falle von Beschichtungen von Polyolefinfolien mit Polyacrylatschmelzklebern für Anwendungen als Schutzfolien häufig noch nicht ausreichend sind.

Strahlungsvernetzbare Schmelzklebstoffe auf der Basis von (Meth)acrylatpolymeren und deren Verwendung als Haftklebstoffe sind beispielsweise bekannt aus DE 102004058070, EP 246 848 A, EP 377 191 A, EP 445 641 A, EP 376 054 A oder WO 01/23488. Strahlungsvernetzbare Schmelzhaftklebstoffe für wiederabziehbare Träger sind beispielsweise aus der WO 01/023488 bekannt. DE 10 2012 218 335 beschreibt bestimmte Haftklebstoffe in Form von strahlungsvernetzbaren Schmelzklebstoffen oder in Form von in einem organischen Lösungsmittel gelöstem, nichtwässrigen Lösungsklebstoffs. Die Haftklebstoffe können u.a. zur Herstellung von Schutzfolien verwendet werden.

Es bestand daher die Aufgabe, eine mit einem lösungsmittelfreien und wasserfreien Haftklebstoff beschichtete Schutzfolie zur Verfügung zu stellen mit einer verbesserten Verankerung des Haftklebstoffes auf dem wiederabziehbaren Träger bei gleichzeitig möglichst rückstandsfreiem Abzugsverhalten von unterschiedlichsten Substratoberflächen, sowie einer möglichst konstanten Abzugskraft (Schälfestigkeit) auch nach Alterung.

Die Aufgabe wird erfindungsgemäß gelöst durch eine Schutzfolie, umfassend

(a) ein Polyolefinträgermaterial, dessen zu beschichtende Oberfläche vorbehandelt ist, z.B. durch Coronabehandlung oder Plasmabehandlung,

(b) eine Vorbeschichtung des Polyolefinträgermaterials mit mindestens einem Primer, ausgewählt aus Polyurethandispersionen, und

(c) eine Haftklebstoffschicht, wobei die Haftklebstoffschicht gebildet ist durch Strahlungsvernetzung eines strahlungsvernetzbaren Schmelzklebstoffs und wobei der strahlungsvernetzbare Schmelzklebstoff mindestens ein Poly(meth)acrylat enthält, welches gebildet ist aus

(i) mindestens 50 Gew.% C1- bis C18-Alkyl(meth)acrylaten und

(ii) mindestens einem ethylenisch ungesättigten Monomer, welches mindestens eine polare Gruppe aufweist (im Folgenden auch polares Monomer genannt), wobei die polare Gruppe ausgewählt ist aus Carbonsäuregruppen, Carbonsäureanhydridgruppen, Hydroxygruppen, Amidgruppen, Urethangruppen, Harnstoffgruppen, Piperidinylgruppen, Piperazinylgruppen, Morpholinylgruppen, Imidazoylgruppen, Ureidogruppen, Pyrrolidongruppen und Kombinationen von zwei oder mehr der genannten Gruppen;

und wobei der strahlungsvernetzbare Schmelzklebstoff mindestens einen Fotoinitiator enthält und der Fotoinitiator als nicht an das Poly(meth)acrylat gebundenes Additiv vorliegt und/oder der Fotoinitiator in das Poly(meth)acrylat einpolymerisiert ist.

Im Folgenden werden gelegentlich die Bezeichnung "(Meth)acryl..." und ähnliche Bezeichnungen als abkürzende Schreibweise verwendet für "Acryl... oder Methacryl... ". In der Bezeichnung Cx-Alkyl(meth)acrylat und analogen Bezeichnungen bedeutet x die Anzahl der C-Atome der Alkylgruppe.

Mengenangaben zu Monomeren eines Polymers beziehen sich, soweit nicht explizit etwas anderes angegeben ist, auf 100 Gewichtsteile der Summe aller Monomere.

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck.

Der Begriff strahlungsvernetzbar bedeutet, dass der Schmelzklebstoff mindestens eine Verbindung mit mindestens einer strahlungsempfindlichen Gruppe enthält und bei Bestrahlung eine Vernetzungsreaktion induziert wird. Die Bestrahlung zur Vernetzung erfolgt vorzugsweise mit aktinischer Strahlung, vorzugsweise UV-Licht, insbesondere UV-C Strahlung. Ein strahlungsvernetzbarer Schmelzklebstoff enthält vorzugsweise mindestens einen Fotoinitiator. Der Fotoinitiator kann als nicht an das Poly(meth)acrylat gebundenes Additiv vorliegen und/oder der Fotoinitiator kann in das Poly(meth)acrylat einpolymerisiert sein.

Schmelzklebstoffe, die auch als Heißklebstoffe, Heißkleber, Heißleim oder Hotmelt bekannt sind, sind lösungsmittelfreie (d.h. nicht in Wasser oder organischen Lösungsmitteln gelöst oder dispergiert) und bei Raumtemperatur mehr oder weniger feste Produkte, die im heißen Zustand hinreichend fluide sind und aufgrund der damit verbundenen Viskositätserniedrigung auf eine Klebefläche aufgetragen werden können, und beim Abkühlen die Klebeverbindung herstellen, wobei strahlungsvernetzbare Schmelzklebstoffe dabei noch bestrahlt werden.

Bei strahlungsvernetzbaren Haftklebstoffen wird die Kohäsion, d. h. die innere Festigkeit der Klebstoffschicht, nach Beschichten des Klebstoffs auf einen Träger durch anschließende fotochemisch induzierte Vernetzung erreicht.

Das strahlungsvernetzbare Poly(meth)acrylat ist zu mindestens 50 Gew.% oder zu mindestens 60 Gew.%, oder zu mindestens 80 Gew.% aus C1- bis C18-Alkyl(meth)acrylaten (Monomere M1) gebildet. Bevorzugt sind C1- bis C10-Alkyl(meth)acrylate, oder C4- bis C10-Alkyl(meth)-acrylate, oder C1-C8 Alkyl(meth)acrylate, insbesondere C4- bis C8-Alkyl(meth)acrylate, z.B. Methyl(meth)acrylat, Ethylacrylat, n-Butylacrylat, n-Hexylacrylat, 2-Propylhexylacrylat und 2-Ethylhexylacrylat und deren Mischungen. Besonders bevorzugt sind n-Butylacrylat und 2-Ethylhexylacrylat. Das strahlungsvernetzbare Poly(meth)acrylat ist vorzugsweise zu mindestens 60 Gew.% aus C4- bis C10-Alkyl(meth)acrylaten, vorzugsweise ausgewählt aus n-Butylacrylat und 2-Ethylhexylacrylat, gebildet.

Das strahlungsvernetzbare Poly(meth)acrylatpolymer kann aus weiteren, ethylenisch ungesättigten Verbindungen als Aufbaukomponenten gebildet sein, z.B. Vinylester von bis zu 20 C-Atome enthaltenden Carbonsäuren, Vinylaromaten mit bis zu 20 C-Atome, ethylenisch ungesättigten Nitrile, Vinylhalogenide, Vinylether von 1 bis 10 C-Atome enthaltenden Alkoholen, aliphatischen Kohlenwasserstoffe mit 2 bis 8 C-Atomen und 1 oder 2 Doppelbindungen oder Mischungen dieser Monomeren. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen z.B. Vinyltoluol, $\alpha$- und p-Methylstyrol, alpha-Butylstyrol, 4-n-Butylstyrol, 4-n-Decyl-styrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Als Kohlenwasserstoffe mit 2 bis 8 C-Atomen und zwei olefinischen Doppelbindungen seien Butadien, Isopren und Chloropren genannt.

Die Monomeren mit polaren Gruppen haben vorzugsweise eine Wasserlöslichkeit bei 21 °C größer 5 g/Liter

oder größer 10 g/Liter. Das Poly(meth)acrylatpolymer ist vorzugsweise zu 0,1 bis 30 Gew.%, besonders bevorzugt zu 0,3 bis 25 Gew.%, zu 0,5 bis 15 Gew.%, von größer oder gleich 1 bis 15 Gew.% oder von größer oder gleich 1 bis 5 Gew.% aus den Monomeren mit polaren Gruppen gebildet, wobei Monomere mit mindestens einer Säuregruppe, insbesondere mindestens einer Carbonsäuregruppe, bevorzugt sind.

Als polare Monomere in Betracht kommen insbesondere Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fumarsäure. Bevorzugte Monomere mit Carbonsäuregruppen sind Acrylsäure und Methacrylsäure.

Weitere polare Monomere sind z. B. (Meth)acrylamid und Hydroxylgruppen enthaltende Monomere, insbesondere C1-C10-Hydroxyalkyl-(meth)acrylate. Bevorzugte Monomere mit Hydroxygruppen sind C1-C10-Hydroxyalkyl(meth)acrylate, insbesondere Hydroxyethyl(meth) acrylat und Hydroxypropyl(meth) acrylat.

Der Schmelzklebstoff bzw. das Poly(meth)acrylat ist strahlungsvernetzbar, z.B. durch Bestrahlung mit UV-Licht. Der Schmelzklebstoff enthält dann mindestens einen Fotoinitiator. Der Fotoinitiator kann dabei ausschließlich als nicht an das Poly(meth)acrylat gebundenes Additiv vorliegen. In einer anderen Ausführungsform liegt der Fotoinitiator ausschließlich als in das Poly-(meth)acrylat einpolymerisierte Komponente vor. Es ist aber auch eine Kombination dieser beiden Ausführungsformen möglich. Beim Fotoinitiator kann es sich z.B. um sogenannte $\alpha$-Spalter handeln, das sind Fotoinitiatoren, bei denen eine chemische Bindung gespalten wird, so dass 2 Radikale entstehen, die die weiteren Vernetzungs- oder Polymerisationsreaktionen initiieren. Genannt seien z. B. Acylphosphinoxide (Lucirin® Marken der BASF), Hydroxyalkylphenone (z. B. Irgacure® 184), Benzoinderivate, Benzilderivate, Dialkyloxyacetophenone. Insbesondere kann es sich um sogenannte H-Abstraktoren handeln, welche ein Wasserstoffatom von der Polymerkette ablösen, z. B. handelt es sich hierbei um Fotoinitiatoren mit einer Carbonylgruppe. Diese Carbonylgruppe schiebt sich in eine C-H Bindung unter Ausbildung einer C-C-O-H Gruppierung. Genannt seien hier insbesondere Acetophenon, Benzophenon und deren Derivate. Es können beide Klassen von Fotoinitiatoren allein oder auch im Gemisch verwendet werden. Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder (Meth)acrylgruppe.

Fotoinitiatoren, die dem Polymerisat als Additiv zugesetzt werden können, sind z.B. Acetophenon, Benzoinether, Benzyldialkylketale oder deren Derivate. Der Gehalt des zugemischten Fototinitiators beträgt vorzugsweise 0,05 bis 10 Gew. Teile, besonders bevorzugt 0,1 bis 5 Gew. Teile pro 100 Gew. Teile Poly(meth)acrylat.

Durch Bestrahlung mit energiereichem Licht, insbesondere UV- Licht, bewirkt der Fotoinitiator bzw. die Fotoinitiatorgruppe eine Vernetzung des Polymeren, vorzugsweise durch eine chemische Pfropfreaktion der Fotoinitiatorgruppe mit einer räumlich benachbarten Polymer- oder Oligomerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen. Der Wellenlängenbereich, in dem die Fotoinitiatorgruppe aktiviert werden kann, d.h. in dem die Hauptabsorptionsbande der Fotoinitiatorgruppe liegt, ist vorzugsweise 200 bis 450 nm, besonders bevorzugt 250 bis 350 nm, ganz besonders bevorzugt 250 bis 280 nm.

Bei dem strahlungsvernetzbaren Poly(meth)acrylat kann es sich um einen Klebstoff auf Basis eines Polymers mit einpolymerisiertem Fotoinitiator handeln. Das Poly(meth)acrylat kann hergestellt werden durch radikalische Polymerisation von ethylenisch ungesättigten Monomeren unter Copolymerisation von mindestens einer strahlungsempfindlichen, radikalisch polymerisierbaren organischen Verbindung. Strahlungsempfindliche, radikalisch polymerisierbare organische Verbindungen werden im Folgenden kurz als polymerisierbarer Fotoinitiator bezeichnet. Der polymerisierbare Fotoinitiator kann durch radikalische Copolymerisation in die Polymerkette von Copolymeren eingebaut werden. Polymerisierbare Fotoinitiatoren haben vorzugsweise folgenden prinzipiellen Aufbau:

A-X-B

wobei A ein einwertiger organischer Rest ist, welcher als strahlungsempfindliche Gruppe vorzugsweise eine Phenongruppe aufweist,

X eine Estergruppe ist, ausgewählt aus -O-C(=O)-, -(C=O)-O- und -O-(C=O)-O-, und

B ein einwertiger organischer Rest ist, welcher eine ethylenisch ungesättigte, radikalisch polymerisierbare Gruppe enthält. Bevorzugte Reste A sind Reste, welche mindestens ein Strukturelement enthalten, welches abgeleitet ist von Phenonen, insbesondere von Acetophenonen oder Benzophenonen. Bevorzugte Reste B enthalten mindestens eine, vorzugsweise genau eine Acryl- oder Methacrylgruppe.

Die ethylenisch ungesättigte Gruppe kann direkt an die Gruppe X gebunden sein. Ebenso kann die strahlungsempfindliche Gruppe direkt an die Gruppe X gebunden sein. Es können sich aber auch zwischen ethylenisch ungesättigter Gruppe und der Gruppe X bzw. zwischen strahlungsempfindlicher Gruppe und Gruppe X jeweils eine Spacergruppe (Abstandshalter) befinden. Die Spacergruppe kann z.B. ein Molekulargewicht von bis zu 500, insbesondere bis zu 300

oder 200 g/Mol aufweisen.

Geeignete copolymerisierbare Fotoinitiatoren sind Acetophenon- oder Benzophenonderivate, welche mindestens eine, vorzugsweise eine, ethylenisch ungesättigte Gruppe enthalten, beispielsweise beschrieben in EP 377191 A oder EP 1213306 A. Bei der ethylenisch ungesättigten Gruppe handelt es sich vorzugsweise um eine Acryl- oder Methacrylgruppe. Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter). Die Spacergruppe kann z. B. bis 100 C-Atome enthalten.

Eine bevorzugte Gruppe X ist die Carbonatgruppe -O-(C=O)-O-. Bevorzugte polymerisierbare Fotoinitiatoren sind Verbindungen der Formel F-1:

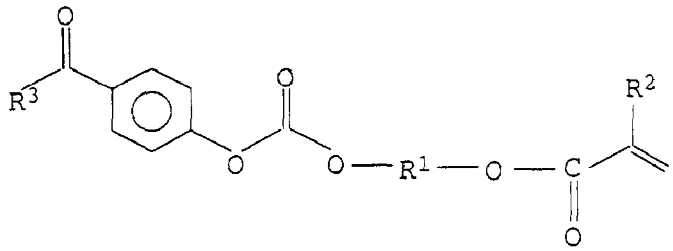

F-1

worin R1 für einen organischen Rest mit bis zu 30 C-Atomen, R2 für ein H-Atom oder eine Methylgruppe und R3 für eine substituierte oder unsubstituierte Phenylgruppe oder für eine C1-C4-Alkylgruppe steht. R1 steht besonders bevorzugt für eine Alkylengruppe, insbesondere für eine C2-C8-Alkylengruppe. R3 steht besonders bevorzugt für eine Methylgruppe oder für eine Phenylgruppe, ganz besonders bevorzugt für eine Phenylgruppe.

Weitere, als copolymerisierbare Fotoinitiatoren geeignete Acetophenon- und Benzophenonderivate sind z.B. solche der Formel F-2

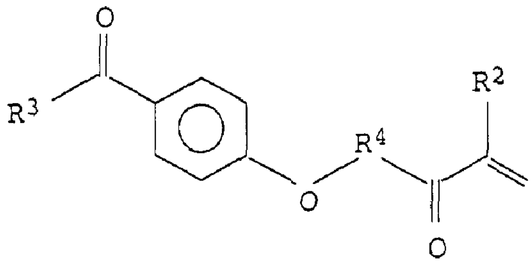

F-2

worin R2 und R3 die obige Bedeutung haben kann und R4 für eine Einfachbindung oder für (-CH2-CH2-O)n stehen kann, wobei n für eine ganze Zahl von 1 bis 12 steht.

Der Schmelzklebstoff enthält vorzugsweise 0,0001 bis 0,5 mol, besonders bevorzugt 0,0002 bis 0,1, ganz besonders bevorzugt 0,003 bis 0,01 mol des Fotoinitiators, bzw. der als Fotoinitiator wirksamen, an das Polymer gebundenen Molekülgruppe, pro 100 g Poly(meth)acrylat.

Das Poly(meth)acrylat ist im Fall des einpolymerisierten Fotoinitiators vorzugsweise zu größer oder gleich 0,5 Gew.%, vorzugsweise größer oder gleich 1 Gew.%, z.B. von 0,5 bis 10 Gew.%, von 1 bis 5 Gew.% oder von 1 bis zu 4 Gew.% aus mindestens einer ethylenisch ungesättigten, copolymerisierbaren Verbindung mit einer Fotoinitiatorgruppe gebildet.

Ein erfindungsgemäß bevorzugtes strahlungsvernetzbares Poly(meth)acrylat ist gebildet aus

(a1) zu mindestens 60 Gew.% aus mindestens einem Acrylat, welches ausgewählt ist aus der Gruppe bestehend aus n-Butylacrylat, n-Hexylacrylat, 2-Ethyl-hexylacrylat, Propylheptylacrylat und deren Mischungen,

(a2) zu 1 bis 5 Gew.% aus mindestens einem Monomeren mit polaren Gruppen, wobei die polaren Gruppen ausgewählt sind aus Carbonsäuregruppen, Carbonsäureamidgruppen, Pyrrolidongruppen, Urethangruppen und Harnstoffgruppen,

(a3) zu 0,5 bis 4 Gew.% aus mindestens einem ethylenisch ungesättigten, copolymerisierbaren Fotoinitiator, und

(a4) zu 0 bis 25 Gew.% aus mindestens einem weiteren, von den Monomeren (a1) bis (a3) verschiedenen Monomer, vorzugsweise Methyl(meth)acrylat.

Strahlungsvernetzbare Poly(meth)acrylate weisen vor Vernetzung eine Glasübergangstemperatur von vorzugsweise kleiner oder gleich 10 °C, z.B. von -60 bis +10 °C, insbesondere im Bereich von -60 bis 0°C, oder von -55°C bis -10 °C, besonders bevorzugt von -55 °C bis -20 °C auf. Die Glasübergangstemperatur wird durch Differential Scanning Calorimetrie (ASTM D 3418-08, sogenannte "midpoint temperature") bestimmt. Die Glasübergangstemperatur des Polymers ist die bei Auswertung der zweiten Heizkurve (Heizrate 20° C/min) erhaltene Glasübergangstemperatur.

Durch die sogenannte Foxgleichung ist es dem Fachmann möglich, Copolymere im geeigneten Tg-Bereich vorab zu identifizieren und diese durch geeignete Variation von Art und Menge der Monomeren gezielt herzustellen. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g{}^1 + x^2/T_g{}^2 + \dots\, x^n/T_g{}^n,$$

wobei $x^1$, $x^2$, .... $x^n$ die Massenbrüche der Monomeren 1, 2, .... n und $T_g{}^1$, $T_g{}^2$, .... $T_g{}^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989).

Das Poly(meth)acrylat des Schmelzklebstoffs hat vorzugsweise einen K-Wert von größer oder gleich 20, z.B. von 30 bis 80, besonders bevorzugt von 40 bis 60, gemessen in Tetrahydrofuran (1 %ige Lösung, 21 °C). Der K-Wert nach Fikentscher ist ein Maß für das Molekulargewicht und die Viskosität des Polymerisats. Dabei erfolgt die Viskositätsmessung mittels eines Kapillarviskosimeters. Durchführungsvorschriften finden sich in DIN EN ISO 1628-1:2012-10.

Die Poly(meth)acrylate können durch Copolymerisation der monomeren Komponenten, optional einschließlich des copolymerisierbaren Fotoinitiators unter Verwendung der üblichen Polymerisationsinitiatoren sowie optional von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die Poly(meth)acrylate durch Polymerisation der Monomeren in organischen Lösungsmitteln, insbesondere in organischen Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Die Polymerisate können bei Temperaturen von 20 bis 150 °C, vorzugsweise bei Temperaturen im Bereich von 70 bis 120 °C und Drucken von 0,1 bis 100 bar (absolut), bevorzugt bei 0,3 bis 10 bar, in Gegenwart von 0,01 bis 10 Gew.-% an Peroxiden oder Azostartern als Polymerisationsinitiatoren, bezogen auf die Monomeren und in Gegenwart von 0 bis 200 Gew.-% an indifferenten Lösungsmitteln, bevorzugt 5 bis 25 Gew.-%, bezogen auf die Monomeren, d.h. durch Lösungs- oder Substanzpolymerisation hergestellt werden. Vorzugsweise erfolgt die Reaktion unter zunehmendem Vakuum, z.B. durch Absenkung des Drucks von Normaldruck (1 bar) auf 500 mbar (absolut). Lösungsmittel sind beispielsweise Kohlenwasserstoffe, Alkohole wie Methanol, Ethanol, Propanol, Butanol, Isobutanol, Ketone wie Aceton, Methylethylketon, Methylisobutylketon, Essigsäureethylester, Nitrile wie Acetonitril und Benzonitril oder Gemische aus den genannten Lösemitteln. In einer bevorzugten Ausführungsform werden als Lösungsmittel für die Polymerisation ein oder mehrere Ketone mit einem Siedepunkt von unter 150°C bei Normaldruck (1 bar).

Als Polymerisationsinitiatoren kommen beispielsweise Azoverbindungen, Ketonperoxide und Alkylperoxide in Betracht, z.B. Acylperoxide wie Benzoylperoxid, Dilauroylperoxid, Didecanoylperoxid, Isononanoylperoxid, Alkylester wie tert.-Butyl-perpivalat, tert.-Butyl-per-2-ethylhexanoat, tert.-Butyl-per-maleinat, tert.-Butyl-per-isononanoat, tert.-Butyl-per-benzoat, tert.-Amylper-2-ethylhexanoat, Dialkylperoxide wie Dicumylperoxid, tert.-Butylcumylperoxid, Di-tert.-Butylperoxid und Peroxodicarbonate. Des Weiteren können als Initiatoren Azostarter wie beispielsweise 2,2'-Azobisisobutyronitril, 2,2'-Azobis(methylisobutyrat) oder 2,2'-Azobis(2,4-dimethylvaleronitril) Verwendung finden.

Für die Durchführung der Polymerisation können dem Reaktionsgemisch auch den Polymerisationsgrad senkende Verbindungen, sogenannte Polymerisationsregler zugesetzt werden, z.B. in Mengen von 0,1 bis 0,8 Gew.-Teile, bezogen auf 100 Gew.-Teile der zu polymerisierenden Monomeren. Geeignet sind z.B. Verbindungen mit einer Thiolgruppe beispielsweise Mercaptane wie Mercaptoethanol, tert.-Butylmercaptan, Mercaptobernsteinsäure, Thioglycolsäureethylhexylester, 3-Mercaptopropyltrimethoxysilan oder Dodecylmercaptan.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150 °C arbeitet. Die

Polymerisate können dann in lösungsmittelfreiem Zustand (Lösungsmittelgehalt vorzugsweise kleiner 2 Gew.-%, bezogen auf die Gesamtzusammensetzung), d. h. als Schmelzen, eingesetzt werden.

Der erfindungsgemäße Schmelzklebstoff weist vorzugsweise eine Nullviskosität bei 130°C kleiner als 100 Pa s auf. Er wird in lösemittelfreier, schmelzbarer Form eingesetzt. Herstellungsbedingtes Lösungsmittel kann vorher nach geeigneten Verfahren entfernt werden, vorzugsweise auf einen Restgehalt von kleiner 0,5 Gew.%, bezogen auf den Feststoffgehalt.

In Betracht kommen insbesondere Schmelzhaftklebstoffe, die Wasser oder organische Lösemittel, z. B. aus der Lösungspolymerisation, allenfalls in geringen Mengen enthalten und aus der Schmelze aufgetragen werden. Vorzugsweise enthält der Schmelzhaftklebstoff, weniger als 5 Gew.-Teile, insbesondere weniger als 2 oder weniger als 1 Gew.-Teil Wasser und/oder organische Lösemittel auf 100 Gew.-Teile der Gewichtssumme Klebstoffpolymer. Besonders bevorzugt ist der Schmelzhaftklebstoff im Wesentlichen frei von Wasser und organischen Lösemitteln.

Der Schmelzklebstoff kann die üblichen Zusätze enthalten wie z.B. Harze, Weichmacher, Antioxidantien, Vernetzer, Füllstoffe, Farbstoffe, Verlaufshilfsmittel, Tackifier (klebrig machende Harze) usw.

Zur Herstellung der Klebstoffbeschichtungen werden die Schmelzhaftklebstoffe als Schmelze auf die mit Primer vorbeschichteten Polyolefinfolien aufgetragen, wobei die Oberfläche zumindest teilweise mit einem erfindungsgemäßen Klebstoff beschichtet wird. Der Schmelzhaftklebstoff kann als Schmelze, d.h. im Allgemeinen bei Temperaturen von 50 bis 160 °C, vorzugsweise 80 bis 150 °C oder größer 100°C aufgetragen werden.

Die Auftragsmenge des Haftklebstoffs ist vorzugsweise 2 bis 30 g/$m^2$, bevorzugt 5 bis 20 g/$m^2$. Schichtdicken sind z.B. 2 bis 30 Mikrometer, vorzugsweise 5 bis 20 Mikrometer.

Als Träger in Betracht kommen Polyolefinfolien, z.B. thermoplastische Kunststofffolien z.B. aus Polyethylen oder Polypropylen. Die Foliendicke ist vorzugsweise 10 bis 250 Mikrometer oder 30 bis 100 Mikrometer, bevorzugt 40 bis 80 Mikrometer.

Die Oberflächen der thermoplastischen Polymerfolien sind zusätzlich vorbehandelt, z.B. durch Corona oder Plasmabehandlung. Die Schutzfolien sind einseitig mit Klebstoff beschichtet. Bevorzugte Substrate, auf die die Schutzfolien aufgeklebt werden können sind Glas, Holz, Metall, Kunststoff, Textilien oder Teppich.

Der erfindungsgemäße strahlungsvernetzbare Schmelzklebstoff wird nach Aufbringen auf die Träger mit energiereicher Strahlung, vorzugsweise UV-Licht, insbesondere UV-C Strahlung (200-280 nm) bestrahlt, so dass eine Vernetzung erfolgt. Im Allgemeinen werden die beschichteten Substrate dazu auf ein Transportband gelegt und das Transportband an einer Strahlungsquelle, z.B. einer UV-Lampe vorbeigeführt. Der Vernetzungsgrad der Polymerisate hängt von der Dauer und Intensität der Bestrahlung ab. Vorzugsweise beträgt die Strahlungsenergie insgesamt 100 bis 1500 mJ/$cm^2$ (bezogen auf den Wellenlängenbereich 250 bis 440 nm); oder 10 bis 100 mJ/$cm^2$, bezogen auf UV-C Strahlung (250 bis 260 nm). Als UV-Strahler können die üblichen Strahler, beispielsweise Quecksilbermitteldrucklampen mit einer Strahlungsleistung von 80 bis 240 Watt/cm eingesetzt werden.

Die Polyolefinfolien werden mit Primer in einer Auftragsmenge von vorzugsweise 0,05 bis 3 g/$m^2$, besonders bevorzugt 0,1 bis 0,5 g/$m^2$ beschichtet.

Als Primer geeignete Polyurethandispersionen sind prinzipiell durch Umsetzung wenigstens eines Polyisocyanats mit wenigstens einer Verbindung, die mindestens zwei gegenüber Isocyanatgruppen reaktive Gruppen aufweist, und Dispersion in Wasser erhältlich. Geeignete Polyurethane umfassen auch sogenannte Polyurethan-Polyharnstoffe, welche neben Polyurethangruppen auch noch Harnstoffgruppen aufweisen. Bevorzugt enthält die Polyurethandispersion wenigstens ein Polyurethan, das gebildet ist aus wenigstens einem Polyisocyanat und wenigstens einem polymeren Polyol. Geeignete polymere Polyole sind vorzugsweise ausgewählt unter Polyesterdiolen, Polyetherdiolen, Polycarbonatdiolen und Gemischen davon. Das polymere Polyol weist vorzugsweise ein zahlenmittleres Molekulargewicht im Bereich von etwa 500 bis 5000 g/mol auf. Bevorzugt sind polymere Diole. Bevorzugt enthält die Polyurethandispersion wenigstens ein Polyurethan, das wenigstens ein Polyisocyanat und eine Diolkomponente einpolymerisiert enthält, von denen a) 10 -100 mol-% bezogen auf die Gesamtmenge der Diole, ein Molekulargewicht von 500 bis 5000 g/mol aufweisen und b) 0 - 90 mol-% bezogen auf die Gesamtmenge der Diole, ein Molekulargewicht von 60 bis 500 g/mol aufweisen.

Vorzugsweise ist das Polyurethan zu mindestens 40 Gew.-%, besonders bevorzugt zu mindestens 60 Gew.-% und ganz besonders bevorzugt zu mindestens 80 Gew.-%, bezogen auf das Gesamtgewicht der zur Herstellung des Polyurethans eingesetzten Monomere, aus wenigstens einem Diisocyanat und wenigstens einem Polyetherdiol und/oder Polyesterdiol aufgebaut. Geeignete weitere Aufbaukomponenten ad 100 Gew.-% sind z.B. die im Folgenden aufgeführten Polyisocyanate mit wenigstens drei NCO-Gruppen und von den polymeren Polyolen verschiedene Verbindungen mit wenigstens zwei gegenüber Isocyanatgruppen reaktiven Gruppen. Dazu zählen z.B. Diole; Diamine; von polymeren Polyolen verschiedene Polymerisate mit mindestens zwei aktiven Wasserstoffatomen pro Molekül; Verbindungen, die zwei aktive Wasserstoffatome und mindestens eine ionogene bzw. ionische Gruppe pro Molekül aufweisen; und Mischungen davon.

Vorzugsweise hat das Polyurethan einen Erweichungspunkt oder Schmelzpunkt im Bereich von -50 bis 150 °C, besonders bevorzugt von 0 bis 100 °C, und ganz besonders bevorzugt von 10 bis 90 °C. Besonders bevorzugt hat

das Polyurethan einen Schmelzpunkt im vorstehenden Temperaturbereich.

Bevorzugte Polyurethane sind aufgebaut aus:

a) wenigstens einem (vorzugsweise monomeren) Diisocyanat,

b) wenigstens einem Diol, wobei die Komponente (b) wenigstens ein Diol mit einem zahlenmittleren Molekulargewicht im Bereich von 500 bis 5000 g/mol aufweist,

c) wenigstens einem von den Monomeren (a) und (b) verschiedenen Monomer mit wenigstens einer Isocyanatgruppe oder wenigstens einer gegenüber Isocyanatgruppen reaktiven Gruppe, das darüber hinaus wenigstens eine hydrophile Gruppe oder eine potentiell hydrophile Gruppe trägt,

d) optional wenigstens einer weiteren, von den Monomeren (a) bis (c) verschiedenen Verbindung mit wenigstens zwei reaktiven Gruppen, die ausgewählt sind unter alkoholischen Hydroxylgruppen, primären oder sekundäre Aminogruppen oder Isocyanatgruppen, und

e) optional wenigstens einer von den Monomeren (a) bis (d) verschiedenen einwertigen Verbindung mit einer reaktiven Gruppe, bei der es sich um eine alkoholische Hydroxylgruppe, eine primäre oder sekundäre Aminogruppe oder eine Isocyanatgruppe handelt.

Die Komponente b) besteht vorzugsweise aus

$b_{1)}$ 10 bis 100 mol-%, bezogen auf die Gesamtmenge der Komponente b), Diole, die ein Molekulargewicht von 500 bis 5000 g/mol aufweisen,

$b_{2)}$ 0 bis 90 mol-%, bezogen auf die Gesamtmenge der Komponente b), Diole, die ein Molekulargewicht von 60 bis weniger als 500 g/mol aufweisen.

Besonders bevorzugt beträgt das Verhältnis der Diole $b_1$) zu den Monomeren $b_2$) 0,1 : 1 bis 5:1, besonders bevorzugt 0,2 : 1 bis 2 : 1. Insbesondere ist das Diol b) ausgewählt aus Polytetrahydrofuran, Polypropylenoxid und Polyesterdiolen, ausgewählt z.B. aus Umsetzungsprodukten zweiwertiger Alkohole mit zweiwertigen Carbonsäuren und Polyesterdiolen auf Lacton-Basis.

Insbesondere zu nennen sind als Monomere (a) Diisocyanate $X(NCO)_2$, wobei X für einen nichtcyclischen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanatodiphenylmethan, 2,4'-Diisocyanatodiphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich. Als Gemische dieser Isocyanate sind besonders die Mischungen der jeweiligen Strukturisomeren von Diisocyanatotoluol und Diisocyanatodiphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 1:9 bis 9:1, insbesondere 4 : 1 bis 1 : 4 beträgt.

Bei den Diolen (b1) kann es sich um Polyesterpolyole handeln, die z. B. aus Ullmanns Enzyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemei-

nen Formel HOOC- $(CH_2)_y$-COOH, wobei y eine Zahl von 1 bis 20, bevorzugt eine gerade Zahl von 2 bis 20 ist, z. B. Bernsteinsäure, Adipinsäure, Sebacinsäure und Dodecandicarbonsäure. Als zweiwertige Alkohole kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-$(CH_2)_x$-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bei den Diolen (b1) kann es sich auch um Polycarbonat-Diole handeln, wie sie z. B. durch Umsetzung von Phosgen mit einem Überschuss von den als Aufbaukomponenten für die Polyesterpolyole genannten niedermolekularen Alkohole erhalten werden können, in Betracht.

Bei den Diolen (b1) kann es sich auch um Polyesterdiole auf Lacton-Basis handeln, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-$(CH_2)_z$-COOH ableiten, wobei z eine Zahl von 1 bis 20 ist und ein H-Atom einer Methyleneinheit auch durch einen $C_1$- bis $C_4$-Alkylrest substituiert sein kann. Beispiele sind epsilon-Caprolacton, beta-Propiolacton, gamma-Butyrolacton und/oder Methylgamma-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Bei den Diolen (b1) kann es sich auch um Polyetherdiole handeln. Polyetherdiole sind insbesondere durch Polymerisation von Ethylenoxid, Propylenoxid, Butylenoxid, Tetrahydrofuran, Styroloxid oder Epichlorhydrin mit sich selbst, z. B. in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Besonders bevorzugt sind Polyetherdiole eines Molekulargewichts von 500 bis 5000, und vor allem 600 bis 4500. Ein besonders bevorzugtes Polyetherdiol ist Polytetrahydrofuran. Geeignete Polytetrahydrofurane können durch kationische Polymerisation von Tetrahydrofuran in Gegenwart von sauren Katalysatoren, wie z. B. Schwefelsäure oder Fluoroschwefelsäure, hergestellt werden. Derartige Herstellungsverfahren sind dem Fachmann bekannt. Geeignete Verbindungen b1) sind auch alpha,omega-Diaminopolyether, die durch Aminierung von Polyalkylenoxiden mit Ammoniak herstellbar sind.

Unter $b_1$) fallen nur Polyetherdiole, die zu weniger als 20 Gew.-%, bezogen auf ihr Gesamtgewicht, aus Ethylenoxid bestehen. Polyetherdiole mit mindestens 20 Gew.-% eingebauten Ethylenoxideinheiten sind hydrophile Polyetherdiole, welche zu den Monomeren c) zählen.

Optional können als Monomere $b_1$) auch Polyhydroxyolefine mitverwendet werden, bevorzugt solche mit 2 endständigen Hydroxylgruppen, z. B. alpha-omega-Dihydroxypolybutadien, alpha-omega-Dihydroxypolymethacrylester oder alpha-omega-Dihydroxypolyacrylester als Monomere. Solche Verbindungen sind beispielsweise aus der EP-A 622 378 bekannt. Weitere geeignete Polyole sind Polyacetale, Polysiloxane und Alkydharze.

Bevorzugt handelt es sich bei mindestens 95 mol-% der Diole $b_1$) um Polyesterdiole und/oder Polytetrahydrofuran. Besonders bevorzugt werden als Diole $b_1$) ausschließlich Polyesterdiole und/oder Polytetrahydrofuran verwendet.

In einer bevorzugten Ausführungsform ist das Polyurethan aus mindestens einem amorphen polymeren Polyol, insbesondre mindestens einem amorphen Polyesterpolyol gebildet. Amorph sind Feststoffe, deren Bausteine nicht in Kristallgittern angeordnet sind, d.h. nicht kristallin sind. Amorphe polymere Polyole sind erfindungsgemäß insbesondere solche polymere Polyole, welche im Temperaturbereich von -30°C bis +60°C keinen Schmelzpunkt aufweisen.

Bevorzugt enthält das Polyurethan amorphe polymere Polyole, vorzugsweise mindestens ein amorphes Polyesterpolyol in einer Menge von mehr als 10 Gew.-%, oder mehr als 20 Gew.%, oder mehr als 25 Gew.%, besonders bevorzugt mindestens 35 Gew.%, bezogen auf das Polyurethan.

Insgesamt ist das Polyurethan vorzugsweise aufgebaut aus mindestens einem amorphen polymeren Polyol, vorzugsweise mindestens einem amorphen Polyesterpolyol, mit einem Molekulargewicht von über 500 und bis 4000 g/mol.

Insgesamt ist das Polyurethan vorzugsweise aufgebaut aus:

10 bis 80 Gew.% an mindestens einem amorphen polymeren Polyol, vorzugsweise mindestens einem amorphen Polyesterpolyol, mit einem Molekulargewicht von über 500 und bis 4000 g/mol.

Bevorzugt werden amorphe Polyesterdiole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische

zur Herstellung der Polyesterpolyole verwendet werden.

Vorzugsweise ist zur Herstellung des amorphen Polyesterdiols (i) mindestens eine Polycarbonsäure eine aromatische Dicarbonsäure, insbesondere Isophtalsäure. In einer bevorzugten Ausführungsform wird zur Herstellung des amorphen Polyesterdiols (i) ein Gemisch von Carbonsäuren verwendet bestehend aus mindestens einer aliphatischen Dicarbonsäure mit 3 bis 10, vorzugsweise 4 bis 8 C-Atomen und mindestens einer aromatischen Dicarbonsäure. Das Mischungsverhältnis ist vorzugsweise von 0,5:1 bis 2:1. Ein bevorzugtes Dicarbonsäuregemisch ist Adipinsäure/Isophthalsäure, insbesondere im Verhältnis von 0,5:1 bis 2:1.

Zur Herstellung der amorphen Polyesterdiole kommen als mehrwertige Alkohole z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)-cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel $HO-(CH_2)_x-OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol. Zur Herstellung der amorphen Polyesterdiole wird vorzugsweise mindestens ein Alkandiol mit 2 bis 10, vorzugsweise 4 bis 8 C-Atomen eingesetzt.

Bevorzugt enthält das Polyurethan 10 bis 80 Gew.% an mindestens einem amorphen Polyesterdiol mit einem zahlenmittleren Molekulargewicht über 500 bis 4000 g/mol, welches aufgebaut ist aus einem Gemisch aus mindestens einer aliphatischen Dicarbonsäure mit 3 bis 10, vorzugsweise 4 bis 8 C-Atomen und mindestens einer aromatischen Dicarbonsäure im Verhältnis von 0,5:1 bis 2:1 und mindestens einem Alkandiol mit 2 bis 10, vorzugsweise 4 bis 8 C-Atomen.

Zusätzlich zu den amorphen Polyesterdiolen können als weitere Makrodiole auch nichtamorphe, d.h. kristalline oder teilkristalline Polyesterpolyole eingesetzt werden, welche aus Polycarbonsäuren und mehrwertigen Alkoholen herstellbar sind. Als mehrwertige Alkohole kommen die oben genannten in Frage. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel $HOOC-(CH_2)_y-COOH$, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Das Molverhältnis von amorphem polymeren Polyol, vorzugsweise amorphem Polyesterpolyol, zu davon verschiedenem Makrodiol ist vorzugsweise von 1:5 bis 5:1, insbesondere von 1:2 bis 2:1.

Die Härte und der Elastizitätsmodul der Polyurethane lassen sich erhöhen, wenn als Diole (b) neben den Diolen $b_1$) noch niedermolekulare Diole $b_2$) mit einem Molekulargewicht von etwa 60 bis 500, vorzugsweise von 62 bis 200 g/mol, eingesetzt werden. Als Monomere $b_2$) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden. Als Diole $b_2$) kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel $HO-(CH_2)_x-OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Um die Wasserdispergierbarkeit der Polyurethane zu erreichen, enthalten die Polyurethane von den Komponenten (a) und (b) verschiedene Monomere (c), die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen, als Aufbaukomponente. Im folgenden Text wird der Begriff "hydrophile Gruppen oder potentiell hydrophile Gruppen" mit "(potentiell) hydrophile Gruppen" abgekürzt.

Die (potentiell) hydrophilen Gruppen reagieren mit Isocyanaten wesentlich langsamer als die funktionellen Gruppen der Monomere, die zum Aufbau der Polymerhauptkette dienen. Der Anteil der Komponenten mit (potentiell) hydrophilen Gruppen an der Gesamtmenge der Komponenten (a) bis (f) wird im allgemeinen so bemessen, dass die Molmenge der (potentiell) hydrophilen Gruppen (vorzugsweise anionischen oder potentiell anionischen Gruppen) bezogen auf die Gewichtsmenge aller Monomere (a) bis (e), 30 bis 1000, bevorzugt 50 bis 500 und besonders bevorzugt 80 bis 300 mmol/kg beträgt. Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis

100, bevorzugt 10 bis 80 Ethylenoxid-Wiederholungseinheiten, in Betracht. Der Gehalt an Polyethylenoxid-Einheiten beträgt im Allgemeinen 0 bis 10, bevorzugt 0 bis 6 Gew. %, bezogen auf die Gewichtsmenge aller Monomere (a) bis (e). Bevorzugte Monomere mit nichtionischen hydrophilen Gruppen sind Polyethylenoxiddiole mit mindestens 20 Gew. % Ethylenoxid, Polyethylenoxidmonoole sowie die Reaktionsprodukte aus einem Polyethylenglykol und einem Diisocyanat, die einen endständig veretherten Polyethylenglykolrest tragen. Derartige Diisocyanate sowie Verfahren zu deren Herstellung sind in den Patentschriften US-A 3,905,929 und US-A 3,920,598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen. Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen. (Potentiell) ionische Monomere (c) sind z. B. in Ullmanns Enzyklopädie der technischen Chemie, 4. Auflage, Band 19, S. 311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im Allgemeinen ein zwischen 500 und 6000 g/mol liegendes Molgewicht auf. Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie $C_1$- bis $C_6$-Alkylhalogeniden oder Benzylhalogeniden, z. B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 C-Atomen, wie sie auch in der US 3,412,054 beschrieben sind. Insbesondere sind Verbindungen der allgemeinen Formel ($c_1$),

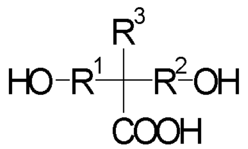

($c_1$)

in welcher $R^1$ und $R^2$ für eine $C_1$- bis $C_4$-Alkandiygruppe und $R^3$ für eine $C_1$- bis $C_4$-Alkylgruppe steht, und vor allem Dimethylolpropionsäure (DMPA) bevorzugt. Weiterhin eignen sich entsprechende Dihydroxysulfonsäuren und Dihydroxyphosphonsäuren wie 2,3-Dihydroxypropanphosphonsäure. Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen auch Aminocarbonsäuren wie Lysin, beta-Alanin oder die in der DE-A 20 34 479 genannten Addukte von aliphatischen diprimären Diaminen an a,ß-ungesättigte Carbon- oder Sulfonsäuren in Betracht. Solche Verbindungen gehorchen beispielsweise der Formel ($c_2$)

$$H_2N\text{-}R^4\text{-}NH\text{-}R^5\text{-}X \qquad (c_2)$$

in der $R^4$ und $R^5$ unabhängig voneinander für eine $C_1$- bis $C_6$-Alkandiyl-Einheit, bevorzugt für Ethylen; und X für COOH oder $SO_3H$ stehen. Besonders bevorzugte Verbindungen der Formel ($c_2$) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist. Weiterhin besonders bevorzugt sind die Addukte der oben genannten aliphatischen diprimären Diamine an 2-Acrylamido-2-methylpropansulfonsäure, wie sie z. B. in der DE-B 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Neutralisierungsmittel sind z. B. Ammoniak, NaOH, Triethanolamin

(TEA) Triisopropylamin (TI-PA) oder Morpholin, bzw. dessen Derivate. Besonders bevorzugt liegen die Sulfonat- oder Carboxylatgruppen in Form ihrer Salze mit einem Alkaliion oder einem Ammoniumion als Gegenion vor.

Die Monomere (d), die von den Monomeren (a) bis (c) verschieden sind und welche optional auch Bestandteile des Polyurethans sind, dienen im Allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/ oder sekundäre Aminogruppen tragen. Alkohole mit einer höheren Wertigkeit als 2, die zur Einstellung eines gewissen Verzweigungs- oder Vernetzungsgrades dienen können, sind z. B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z. B. Monoethanolamin. Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Vorzugsweise ist das Polyurethan der Polyurethandispersion mit mindestens einem Polyamin kettenverlängert. Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclhexan, Aminoethylethanolamin, Hydrazin, Hydrazinhydrat oder Triamine wie Diethylentriamin oder 1,8-Diamino-4-aminomethyl-octan. Die Amine können auch in blockierter Form, z. B. in Form der entsprechenden Ketimine (siehe z. B. CA-A 1 129 128), Ketazine (vgl. z. B. die US-A 4,269,748) oder Aminsalze (siehe US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden. Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d). Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die optional mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a'-dimethylbenzylisocyanat (TMI) und Ester von Acryl- oder Methacrylsäure wie Hydroxyethylacrylat oder Hydroxyethylmethacrylat.

Beschichtungen mit einem besonders guten Eigenschaftsprofil erhält man vor allem dann, wenn als Monomere (a) im Wesentlichen nur aliphatische Diisocyanate, cycloaliphatische Diisocyanate oder araliphatische Diisocyanate eingesetzt werden. Diese Monomerkombination wird in hervorragender Weise ergänzt als Komponente (c) durch Diaminosulfonsäure-Alkali-Salze; ganz besonders durch die N-(2-Aminoethyl)-2-aminoethansulfonsäure bzw. ihre entsprechenden Alkalisalze, wobei das Na-Salz am besten geeignet ist, und eine Mischung von DETA und IPDA als Komponente (d).

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten (a) bis (e) sowie ihre jeweiligen Molmengen so gewählt, dass das Verhältnis A : B mit

A der Molmenge an Isocyanatgruppen und

B der Summe aus der Molmenge der Hydroxylgruppen und der Molmenge der funktionellen Gruppen, die mit

Isocyanaten in einer Additionsreaktion reagieren können,

0,5 : 1 bis 2 : 1, bevorzugt 0,8 : 1 bis 1,5 : 1, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) zur Herstellung des Polyurethans erfolgt vorzugsweise bei Reaktionstemperaturen von bis zu 180 °C, bevorzugt bis zu 150 °C unter Normaldruck oder unter autogenem Druck. Die Herstellung von Polyurethanen, bzw. von wässrigen Polyurethandispersionen ist dem Fachmann bekannt.

Unter einer wässrigen Polyurethandispersion wird im Rahmen der vorliegenden Erfindung eine Dispersion verstanden, die als kontinuierliche Phase ein wässriges Lösungsmittel aufweist. Geeignete wässrige Lösungsmittel sind Wasser und Gemische aus Wasser mit wassermischbaren Lösungsmitteln, beispielsweise Alkoholen, wie Methanol, Ethanol, n-Propanol, Isopropanol, n-Butanol, sek.-Butanol, tert.-Butanol, n-Hexanol und Cyclohexanol; Glykole, wie Ethylenglykol, Propylenglykol und Butylenglykol; die Methyl- oder Ethylether der zweiwertigen Alkohole, Diethylenglykol, Triethylenglykol, Polyethylenglykole mit zahlenmittleren Molekulargewichten bis etwa 3000, Glycerin und Dioxan sowie Ketone, wie insbesondere Aceton. In einer speziellen Ausführungsform ist die Polyurethandispersion im Wesentlichen frei von organischen Lösungsmitteln. Unter "im Wesentlichen frei von organischen Lösungsmitteln" wird dabei verstanden, dass der Anteil organischer Lösungsmittel höchstens 5 Gew.-%, besonders bevorzugt höchstens 1 Gew.-%, insbesondere höchstens 0,1 Gew.-%, bezogen auf das Gesamtgewicht des Lösungsmittels, beträgt.

Die Herstellung der Polyurethane erfolgt in einer bevorzugten Ausführung in Gegenwart wenigstens eines organischen Lösungsmittels. Bevorzugte organische Lösungsmittel zur Herstellung der Polyurethane sind Ketone, wie Aceton und Methylethylketon, sowie N-Methylpyrrolidon. Besonders bevorzugt wird Aceton eingesetzt. Sofern zur Herstellung der Polyurethane ein zumindest teilweise wassermischbares Lösungsmittel eingesetzt wird, kann die erfindungsgemäße Polyurethandispersion neben Wasser das zur Herstellung eingesetzte organische Lösungsmittel enthalten. Selbstverständlich kann die Herstellung der erfindungsgemäßen Polyurethandispersionen in Gegenwart wenigstens eines organischen Lösungsmittels erfolgen und dieses anschließend teilweise oder vollständig gegen Wasser ausgetauscht werden.

Bevorzugte Schutzfolien sind solche, bei denen die Ablösung von einem Substrat durch Adhäsionsbruch der strahlungsvernetzten Klebstoffschicht erfolgt, wobei die Klebstoffschicht sich vom Substrat löst und vollständig auf dem Polyolefinträgermaterial verbleibt.

Bevorzugte Schutzfolie sind dadurch gekennzeichnet, dass die Kraft zum Abziehen der Schutzfolien von gebürstetem Stahl nicht mehr als 5 N/25 mm bei 23°C beträgt (Messverfahren siehe Beispiele).

Gegenstand der Erfindung ist auch ein Verfahren zur Herstellung von Schutzfolien, wobei

(1) ein Polyolefinträgermaterial mit mindestens einem Primer vorbeschichtet wird, wobei der Primer ausgewählt ist aus Polyurethandispersionen,

(2) auf die Primerschicht eine Haftklebstoffschicht aufgebracht wird wobei die Haftklebstoffschicht gebildet ist durch Strahlungsvernetzung eines strahlungsvernetzbaren Schmelzklebstoffs und wobei der strahlungsvernetzbare Schmelzklebstoff mindestens ein Poly(meth)-acrylat enthält, welches gebildet ist aus

(i) mindestens 50 Gew.% C1- bis C18-Alkyl(meth)acrylaten und

(ii) mindestens einem ethylenisch ungesättigten Monomer, welches mindestens eine polare Gruppe aufweist, wobei die polare Gruppe ausgewählt ist aus Carbonsäuregruppen, Carbonsäureanhydridgruppen, Hydroxygruppen, Amidgruppen, Urethangruppen, Harnstoffgruppen, Piperidinylgruppen, Piperazinylgruppen, Morpholinylgruppen, Imidazoylgruppen, Ureidogruppen, Pyrrolidongruppen und Kombinationen von zwei oder mehr der genannten Gruppen, vorzugsweise mindestens einem Säuremonomer,

und wobei der strahlungsvernetzbare Schmelzklebstoff mindestens einen Fotoinitiator enthält und der Fotoinitiator als nicht an das Poly(meth)acrylat gebundenes Additiv vorliegt und/oder der Fotoinitiator in das Poly(meth)acrylat einpolymerisiert ist.

Die Schutzfolien eignen sich als Schutz für unterschiedlichste Substratoberflächen. Die Substratoberflächen können z.B. aus Metall (z.B. gebürstetem Stahl), Glas, Kunststoffen (z.B. PVC, PMMA, PS, Polycarbonat, Polyester, Polyamid, Polyolefin) etc. sein und eignen sich zum Schutz vor Verschmutzung oder mechanischer Einwirkung insbesondere während der Herstellung und des Transportes der zu schützenden Artikel. Zu Beginn der vorgesehenen endgültigen Anwendung bzw. dem Verbleib des Artikels in seiner bestimmungsgemäßen Verwendung wird die Folie entfernt.

Die erfindungsgemäßen Schutzfolien zeichnen sich aus durch

- Eine gute Verankerung des Haftklebstoffes auf der Schutzfolie,
- ein rückstandsfreies Abzugsverhalten von unterschiedlichsten Substratoberflächen
- eine konstante Abzugskraft (Schälfestigkeit) auch nach Alterung
- eine Abzugskraft (Schälfestigkeit) von vorzugsweise nicht mehr als 5 N/25mm (Messverfahren siehe Beispiele)

Beispiele

Einsatzstoffe:

| | |
|---|---|
| nBA | n-Butylacrylat |
| 2-EHA | 2-Ethlyhexylacrylat |
| MMA | Methylmethacrylat |
| MA | Methylacrylat |
| AS | Acrylsäure |
| F! | Fotoinitiatormonomer: polymerisierbarer Fotoinitiator (35%ige Lösung in MEK) der Formel F-1. |
| MEK | Methylethylketon |
| t-BPPiv | tert.-Butylperpivalat (75%ige Lösung in Mineralöl) |
| t-BPOc | tert.-Butylperoctoat |
| Emuldur® 381 A | wässrige Dispersion eines elastomeren Polyester-Polurethans, nicht mit Polyamin kettenverlängert |
| Luphen® 700 | wässrige Dispersion eines elastomeren Polyester-Polurethans, mit Polyamin kettenverlängert |

Beispiel V1 ohne polare Monomere

In einer Polymerisationsapparatur bestehend aus Glasreaktor, Rückflusskühler, Rührer und Stickstoffeinlass werden in leichtem Stickstoffstrom 164,43 g MEK vorgelegt und auf 80 °C erwärmt. Es werden, sobald 70°C erreicht wurden, 21,39 g einer Monomerenmischung bestehend aus 630,00 g 2-EHA, 63,00 g MMA und 20,00 g FI zugegeben. Nach Erreichen von 77°C werden 1,47 g einer Starterlösung aus 3,92 g t-BPPiv und 32,90 g MEK zugegeben und bei >79°C 3 min anpolymerisiert. Dann werden die restlichen 713,00 g Monomerenmischung in 3 h und 36,82 g Starterlösung in 3 h 15 min zugefahren. Anschließend wird die Temperatur innerhalb von 15 min auf 90°C erhöht und eine Lösung von 2,43 g t-BPOc in 21,63 g MEK in 30 min zugegeben. Danach wird Vakuum angelegt und das Lösungsmittel bei maximal 135°C und kleiner 50 mbar abdestilliert. Anschließend wird noch unter langsamen Rühren 1h bei 135°C und bestem Vakuum entgast. Die Schmelze wird in einen PP-Becher abgelassen.

K-Wert (1% in THF): 47,9
Nullviskosität bei 110°C: 41,3 Pa s,

Beispiel B1 mit polaren Monomeren

In einer Polymerisationsapparatur bestehend aus Glasreaktor, Rückflusskühler, Rührer und Stickstoffeinlass werden in leichtem Stickstoffstrom 211,41 g MEK vorgelegt und auf 80 °C erwärmt. Es werden, sobald 70°C erreicht wurden, 27,50 g einer Monomerenmischung bestehend aus 810,00 g 2-EHA, 58,50 g MMA, 22,50 g AS und 25,71 g FI zugegeben. Nach Erreichen von 77°C werden 1,84 g einer Starterlösung aus 3,60 g t-BPPiv und 42,30 g MEK zugegeben und bei >79°C 3 min anpolymerisiert. Dann werden die restlichen 916,71 g Monomerenmischung in 3 h und 45,90 g Starterlösung in 3 h 15 min zugefahren. Anschließend wird die Temperatur innerhalb von 15 min auf 90°C erhöht und eine Lösung von 3,12 g t-BPOc in 27,81 g MEK in 30 min zugegeben. Danach wird Vakuum angelegt und das Lösungsmittel bei maximal 135°C und kleiner 50 mbar abdestilliert. Anschließend wird noch unter langsamen Rühren 1h bei 135°C und bestem Vakuum entgast. Die Schmelze wird in einen PP-Becher abgelassen.

K-Wert (1% in THF): 47,3
Nullviskosität bei 110°C: 58,9 Pa s,

Beispiel B2 mit polaren Monomeren und wenig Fotoinitiator

In einer Polymerisationsapparatur bestehend aus Glasreaktor, Rückflusskühler, Rührer und Stickstoffeinlass werden in leichtem Stickstoffstrom 179,28 g MEK vorgelegt und auf 80 °C erwärmt. Es werden, sobald 70°C erreicht wurden, 40,41 g einer Monomerenmischung bestehend aus 397,60 g n-BA, 230,80 g 2-EHA, 147,20 g MA, 20,00 g AS

und 12,57 g FI zugegeben. Nach Erreichen von 77°C werden 1,61 g einer Starterlösung aus 3,41 g t-BPPiv und 28,72 g MEK zugegeben und bei >79°C 3 min anpolymerisiert. Dann werden die restlichen 808,17 g Monomerenmischung in 2 h 45 min und 32,13 g Starterlösung in 3 h zugefahren. Anschließend wird die Temperatur innerhalb von 15 min auf 90°C erhöht und eine Lösung von 1,55 g t-BPOc in 19,20 g MEK in 30 min zugegeben. Danach wird Vakuum angelegt und das Lösungsmittel bei maximal 135°C und kleiner 50 mbar abdestilliert. Anschließend wird noch unter langsamen Rühren 1h bei 135°C und bestem Vakuum entgast. Die Schmelze wird in einen PP-Becher abgelassen.

K-Wert (1% in THF): 50,5
Nullviskosität bei 130°C: 70,0 Pa s,

Beispiel B3 mit polaren Monomeren und erhöhten Fotoinitiator-Gehalt

In einer Polymerisationsapparatur bestehend aus Glasreaktor, Rückflusskühler, Rührer und Stickstoffeinlass werden in leichtem Stickstoffstrom 179,28 g MEK vorgelegt und auf 80 °C erwärmt. Es werden, sobald 70°C erreicht wurden, 40,74 g einer Monomerenmischung bestehend aus 394,00 g n-BA, 230,80 g 2-EHA, 147,20 g MA, 20,00 g AS und 22,86 g FI zugegeben. Nach Erreichen von 77°C werden 1,65 g einer Starterlösung aus 4,27 g t-BPPiv und 28,72 g MEK zugegeben und bei >79°C 3 min anpolymerisiert. Dann werden die restlichen 814,86 g Monomerenmischung in 2 h 45 min und 32,99 g Starterlösung in 3 h zugefahren. Anschließend wird die Temperatur innerhalb von 15 min auf 90°C erhöht und eine Lösung von 2,03 g t-BPPiv in 19,20 g MEK in 30 min zugegeben. Danach wird Vakuum angelegt und das Lösungsmittel bei maximal 135°C und kleiner 50 mbar abdestilliert. Anschließend wird noch unter langsamen Rühren 1h bei 135°C und bestem Vakuum entgast. Die Schmelze wird in einen PP-Becher abgelassen.

K-Wert (1% in THF): 47,5
Nullviskosität bei 130°C: 49,0 Pa s

Beispiel B4 mit polaren Monomeren und erhöhten Fotoinitiator-Gehalt

In einer Polymerisationsapparatur bestehend aus Glasreaktor, Rückflusskühler, Rührer und Stickstoffeinlass werden in leichtem Stickstoffstrom 179,28 g MEK vorgelegt und auf 80 °C erwärmt. Es werden, sobald 70°C erreicht wurden, 41,65 g einer Monomerenmischung bestehend aus 389,20 g n-BA, 230,80 g 2-EHA, 147,20 g MA, 20,00 g AS und 45,71 g FI zugegeben. Nach Erreichen von 77°C werden 1,65 g einer Starterlösung aus 4,27 g t-BPPiv und 28,72 g MEK zugegeben und bei >79°C 3 min anpolymerisiert. Dann werden die restlichen 832,91 g Monomerenmischung in 2 h 45 min und 32,99 g Starterlösung in 3 h zugefahren. Anschließend wird die Temperatur innerhalb von 15 min auf 90°C erhöht und eine Lösung von 2,03 g t-BPPiv in 19,20 g MEK in 30 min zugegeben. Danach wird Vakuum angelegt und das Lösungsmittel bei maximal 135°C und kleiner 50 mbar abdestilliert. Anschließend wird noch unter langsamen Rühren 1h bei 135°C und bestem Vakuum entgast. Die Schmelze wird in einen PP-Becher abgelassen.

K-Wert (1% in THF): 47,0
Nullviskosität bei 130°C: 38,2 Pa s

Messung der Nullviskosität

Die Nullviskosität ist der Grenzwert der Viskositätsfunktion bei unendlich niedrigen Scherraten. Sie wird gemessen mit einem Anton Paar Rheometer MCR 100 (US 200 Auswertesoftware) in Platte/Platte Geometrie. Die Proben werden in oszillatorischer Scherung bei kleiner Scheramplitude von 10% vermessen. Temperatur 130°C (oder wie angegeben), Kreisfrequenzrampe log 100-0,1 1/s, Messspalt 0,5 mm, Auswertung nach Carreau-Gahleitner I, Stempeldurchmesser 25 mm.

Folienvorbehandlung:

F1 (Vergleich): Corona-vorbehandelte PE-Folie
F2-F3: mit Haftvermittler (Primer) vorbeschichtete PE-Folie; jeweils mit 0,3 $g/m^2$ (fest) Primer (vgl. Tabelle 1) beschichtet
F4 (Vergleich): Plasma-vorbehandelte Folie

Bei der Corona-Behandlung wird die Folienoberfläche durch eine dielektrische Entladung in der Atmosphäre

der Umgebungsluft behandelt. Die Entladung aktiviert dabei eine Vielzahl chemischer Reaktionen zwischen der Umgebungsluft und der Folienoberfläche. Dadurch wird die Oberflächenenergie der Folie erhöht, was beispielsweise eine bessere Benetzbarkeit ermöglicht.

Im Gegensatz zur Corona-Behandlung erfolgt bei der Plasma-Behandlung die Entladung in einer Atmosphäre mit erhöhtem Stickstoff-Anteil. Dadurch kann die Effektivität der Oberflächenbehandlung weiter verbessert werden, indem die Oberflächenenergie der Folie weiter erhöht wird.

Vorgehensweise Folienvorbeschichtung:

Zur Vorbeschichtung wird eine Corona-vorbehandelte 50 μm Polyethylen-Folie mit einer wässrigen Primerdispersion beschichtet. Das Auftragsgewicht nach der Trocknung beträgt 0,3 g/m$^2$.

Tabelle 1: Primer zur Folienvorbeschichtung

| Beispiel | Primer | |
|---|---|---|
| F2 | Emuldur® 381 A | Polyurethan-Dispersion |
| F3 | Luphen® 700 | Polyurethan-Dispersion |

Anwendungstechnische Prüfungen:

Alle Messungen erfolgen bei Raumtemperatur (20°C), soweit nicht explizit etwas anderes angegeben ist.

Die Haftklebstoffe wurden auf 120°C erhitzt und aus der Schmelze mit einer Auftragsmenge von 10 g/m$^2$ (für die Beurteilung der Verankerung auf der Trägerfolie) bzw. 15 g/m$^2$ (für die Beurteilung der Wiederabziehbarkeit von gebürstetem Stahl) auf silikonisierte PET-Folie aufgerakelt und mit UVC-Licht bestrahlt. Der Film wird dann auf eine handelsübliche, wie vorangehend beschriebene vorbehandelte 50 μm PE-Folie (vgl. Tabelle 1) als Träger übertragen. Der mit Haftklebstoff beschichtete Träger wurde in 25 mm breite Prüfstreifen geschnitten.

a) Verankerung auf PE Folie

Mit Klebstoff beschichtete Polyethylenfolienstreifen (PE) werden hinsichtlich der Haftung des Klebstoffs auf dem PE-Träger untersucht. Dabei wird versucht, die Klebstoffschicht an einer Stelle mit dem Daumen von der PE-Folie abzureiben (max. 10 Wiederholungen). Die Güte der Verankerung wird mit Noten beurteilt:

0: einfaches Abreiben;
1: mittelschweres Abreiben;
2: schweres Abreiben;
3: sehr schweres Abreiben;
4: kein Abreiben möglich.

Ziel ist möglichst kein Abreiben oder möglichst schweres Abreiben.

b) Wiederabziehbarkeit von gebürstetem Stahl

Bei der Bestimmung der Schälfestigkeit (Adhäsion) wird jeweils ein 25 mm breiter Prüfstreifen auf einen Prüfkörper aus gebürstetem Stahl (Ra = 2,5 μm) geklebt und mit einer 1 kg schweren Rolle einmal angerollt. Er wird dann mit einem Ende in die oberen Backen einer Zug-Dehnungs-Prüfapparatur eingespannt. Der Klebestreifen wird mit einer Geschwindigkeit von 300 mm/min unter einem 180° Winkel von der Prüffläche abgezogen d.h. der Klebestreifen wird umgebogen und parallel zum Prüfkörper abgezogen und der dazu benötigte Kraftaufwand gemessen. Das Maß für die Schälfestigkeit ist die Kraft in N/25 mm, die sich als Durchschnittswert aus mindestens zwei Messungen ergibt. Die Schälfestigkeit wird 24 h bzw. 7d nach der Verklebung unter definierten Lagerbedingungen bestimmt. Die Testmethode entspricht im Wesentlichen der Finat-Testmethode FTM 1.

Die Wiederabziehbarkeit wird mit der Begutachtung der Rückstände auf der Substratoberfläche (gebürsteter Stahl) beurteilt:

A: Adhäsionsversagen, keine Rückstände;
R: Adhäsionsversagen, punktuelle Rückstände;
K: Kohäsionsversagen, Film trennt sich zwischen Substrat und Träger auf;
A0: Umspulen, Klebstofffilm wird komplett von Träger auf Substrat übertragen.

Ziel ist möglichst rückstandsfreies Abziehen. Außerdem wird die Kraft, die zum Abziehen benötigt wird, in N/25mm gemessen. Ziel ist eine möglichst geringe Abzugskraft im Bereich von 0,5-5 N/25mm bei Raumtemperatur (23°C).

Die Ergebnisse sind in Tabellen 2 bis 3 zusammengefasst.

Tabelle 2: Einfluss der Folienvorbehandlung auf die Verankerung des Haftklebstoffes auf PE-Folie

| Bsp. | Folie | UV-Dosis[1)] [mJ/cm$^2$] | Verankerung nach | | |
|---|---|---|---|---|---|
| | | | 24h Normklima[2)] | 7d Normklima[2)] | 24h unter Wasser |
| V1 [3)] | F1 [3)] | 60 | 0 | 0 | 1-2 |
| V1 [3)] | F3 | 60 | 1 | 1 | 4 |
| B2 | F1 [3)] | 60 | 0-1 | 1 | 3 |
| B2 | F2 | 60 | 1-2 | nicht bestimmt | nicht bestimmt |
| B2 | F3 | 60 | 3 | 3-4 | 4 |
| B2 | F4 [3)] | 60 | 1 | nicht bestimmt | nicht bestimmt |
| B4 | F1 [3)] | 60 | 1-2 | 1-2 | 3 |
| B4 | F2 | 60 | 2-3 | nicht bestimmt | nicht bestimmt |
| B4 | F3 | 60 | 4 | 4 | 4 |
| B4 | F4 [3)] | 60 | 2 | nicht bestimmt | nicht bestimmt |

[1)] UV-C Strahlungsdosis
[2)] 23°C, 50% rel. Luftfeuchte
[3)] Vergleichsversuch

Die Ergebnisse zeigen, dass sich die Verankerung auf der PE-Folie durch Vorbehandlung optimieren lässt. Eine Plasma-Vorbehandlung verbessert diese nur leicht im Vergleich zur Corona-Vorbehandlung (F1 vs. F4). Die Polyurethan- basierten Primer (F2, F3) führen zu einer besseren Verankerung als die Corona- oder Plasmavorbehandlung alleine (F1, F4). Besonders geeignet ist Luphen® 700 (Polyurethan) (F3).

Für eine gute Verankerung auf geprimerter Folie ist das Vorhandensein polarer Gruppen im Schmelzklebstoff vorteilhaft: Bei Fehlen solcher Gruppen wird selbst mit erfindungsgemäßen Primern (V1/F3) eine weniger gute Verankerung erzielt im Vergleich zu erfindungsgemäßem Schmelzklebstoff mit polaren Gruppen (B2/F3, B4/F3). Des Weiteren ist eine höhere Vernetzungsdichte des Haftklebstoffes vorteilhaft (B4 vs. B2).

Tabelle 3: Einfluss der Vernetzungsdichte des Haftklebstoffes auf die Wiederabziehbarkeit

| Bsp. | Folie | UV-Dosis[1)] [mJ/cm$^2$] | Wiederabziehbarkeit nach | | |
|---|---|---|---|---|---|
| | | | 24h Normklima[2)] | 7d Normklima[2)] | 7d bei 50°C/85% r.h. |
| B4 | F3 | 0 | R - 13,5 N/25mm | R - 10 N/25mm | K - 16N/25mm |
| B4 | F3 | 20 | A - 2N/25mm | A - 2N/25mm | A - 1 N/25mm |
| B4 | F3 | 60 | A - 0,5N/25mm | A - 0,5N/25mm | A - 0,5N/25mm |
| B1 | F3 | 0 | K - 10N/25mm | K - 9N/25mm | K - 9N/25mm |
| B1 | F3 | 20 | A - 2N/25mm | A - 2N/25mm | A - 2N/25mm |
| B1 | F3 | 60 | A - 1,7N/25mm | A - 1,6N/25mm | A - 1,3N/25mm |

[1)] UV-C Strahlungsdosis
[2)] 23°C, 50% rel. Luftfeuchte
A: Adhäsionsversagen, keine Rückstände
R: Adhäsionsversagen, punktuelle Rückstände
K: Kohäsionsversagen

Die Ergebnisse zeigen, dass mit zunehmender Vernetzungsdichte (höherer UV-Dosis) ein rückstandsfreies Wiederabziehen bei Verwendung der vorbehandelten PE-Folie möglich ist. Selbst die unvernetzten Proben (UV-Dosis 0) zeigen kein Umspulen, was die gute Verankerung dank Verwendung der geprimerten Folie (F3) unterstreicht. Eine weitere Erhöhung der UV-Dosis (UV-Dosis 60) senkt die Abzugskraft herab, ohne das Abzugsverhalten zu verändern.

Kontaktwinkelmessungen:

Zur Untersuchung der Unterschiede zwischen dem Primer Luphen® 700 (Polyurethan 1) (F3) einerseits im Vergleich zu dem Primer Emuldur® 381 A (Polyurethan 2) (F2) andererseits wurde der Kontaktwinkel eines Wassertropfens auf den geprimerten Folien bestimmt.

Dazu wurden Dreifachmessungen an jeweils drei unterschiedlichen Stellen der vorbehandelten Folie durchgeführt. Aus der Folie wurden in definierten Regionen jeweils drei Prüfstreifen von 1 x 5cm ausgeschnitten (vgl. Fig. 1) und mit einem Wassertropfen benetzt. Die Messung des Kontaktwinkels erfolgte mit einem Gerät der Fa. Krüss (Krüss DAS 100).

Figur 1 stellt die Position der drei Prüfstreifen #1, #2 und #3 dar.

Aufgeführt sind jeweils die Mittelwerte von Dreifachbestimmungen an den drei Prüfstreifen:

Tabelle 4: Kontaktwinkel von dest. Wasser auf unterschiedlich geprimerter PE Folie

| Folie | Kontaktwinkel ($H_2O$) | | |
|---|---|---|---|
| | Streifen #1 | Streifen #2 | Streifen #3 |
| F2 | 102,3°+/-1,1° | 83,3°+/-4° | 76,9° +/- 1,8° |
| F3 | 80,2° +/- 0,9° | 79,1° +/- 2,3° | 80,7° +/- 1,9° |

Die Standardabweichungen der Dreifachbestimmungen sind niedrig, womit die Messergebnisse als gut reproduzierbar angesehen werden können. Es ist auffällig, dass bei dem Beispiel F2 deutliche Abweichungen des Kontaktwinkels von einem zum anderen Prüfstreifen auftreten, während die geprimerte Folie F3 auf allen drei Prüfstreifen wenig voneinander abweichende Kontaktwinkel aufweisen. Unterschiedliche Kontaktwinkel treten bei unterschiedlichen Polaritäten der Oberflächen auf, welche möglicherweise durch unvollständige Benetzung oder Aufkonzentration oberflächenaktiver Stoffe hervorgerufen werden können. Sie können ein Hinweis auf eine inhomogene Folienoberfläche sein, was die Verankerungswirkung herabsetzt. F3 ist besonders bevorzugt, weil dieses Beispiel eine sehr homogene Folienoberfläche aufweist, was eine gute Verankerung des Klebstoffes auf der Folie bewirkt.

## Patentansprüche

**1.** Schutzfolie, umfassend

(a) ein Polyolefinträgermaterial, dessen zu beschichtende Oberfläche vorbehandelt ist, z.B. durch Coronabehandlung oder Plasmabehandlung,
(b) eine Vorbeschichtung des Polyolefinträgermaterials mit mindestens einem Primer, ausgewählt aus wässrigen Polyurethandispersionen; und
(c) eine Haftklebstoffschicht, wobei die Haftklebstoffschicht gebildet ist durch Strahlungsvernetzung eines strahlungsvernetzbaren Schmelzklebstoffs und wobei der strahlungsvernetzbare Schmelzklebstoff mindestens ein Poly(meth)acrylat enthält, welches gebildet ist aus

(i) mindestens 50 Gew.% C1- bis C18-Alkyl(meth)acrylaten und
(ii) mindestens einem ethylenisch ungesättigten Monomer, welches mindestens eine polare Gruppe aufweist, wobei die polare Gruppe ausgewählt ist aus Carbonsäuregruppen, Carbonsäureanhydridgruppen, Hydroxygruppen, Amidgruppen, Urethangruppen, Harnstoffgruppen, Piperidinylgruppen, Piperazinylgruppen, Morpholinylgruppen, Imidazoylgruppen, Ureidogruppen, Pyrrolidongruppen und Kombinationen von zwei oder mehr der genannten Gruppen;

und wobei der strahlungsvernetzbare Schmelzklebstoff mindestens einen Fotoinitiator enthält und der Fotoinitiator als nicht an das Poly(meth)acrylat gebundenes Additiv vorliegt und/oder der Fotoinitiator in das Poly(meth)acrylat einpolymerisiert ist.

2. Schutzfolie nach dem vorhergehenden Anspruch, **dadurch gekennzeichnet, dass** das strahlungsvernetzbare Poly(meth)acrylat vor Vernetzung eine Glasübergangstemperatur von kleiner oder gleich 10 °C, vorzugsweise von -60 bis +10 °C aufweist, gemessen durch Differential Scanning Calorimetrie nach ASTM D 3418-08 als sogenannte midpoint temperature bei Auswertung der zweiten Heizkurve bei einer Heizrate von 20° C/min.

3. Schutzfolie nach einem der vorhergehenden Ansprüche, **dadurch gekennzeichnet, dass** das Poly(meth)acrylat des Schmelzklebstoffs einen K-Wert von mindestens 30, vorzugsweise von 30 bis 80 aufweist.

4. Schutzfolie nach einem der vorhergehenden Ansprüche, **dadurch gekennzeichnet, dass** das Trägermaterial ausgewählt ist aus Polyethylen und Polypropylen.

5. Schutzfolie nach einem der vorhergehenden Ansprüche, **dadurch gekennzeichnet, dass** der Gehalt an anionischen oder potentiell anionischen Gruppen im Polyurethan 30 bis 1000 mmol/kg Polyurethan beträgt.

6. Schutzfolie nach einem der vorhergehenden Ansprüche, **dadurch gekennzeichnet, dass** das Polyurethan der Polyurethandispersion gebildet ist unter Verwendung von mindestens einem amorphen polymeren Polyol, vorzugsweise mindestens einem amorphen Polyesterpolyol.

7. Schutzfolie nach dem vorhergehenden Anspruch, **dadurch gekennzeichnet, dass** das amorphe Polyesterdiol aufgebaut ist aus einem Gemisch aus mindestens einer aliphatischen Dicarbonsäure mit 3 bis 10, vorzugsweise 4 bis 8 C-Atomen und mindestens einer aromatischen Dicarbonsäure im Verhältnis von 0,5:1 bis 2:1 und mindestens einem Alkandiol mit 2 bis 10, vorzugsweise 4 bis 8 C-Atomen.

8. Schutzfolie nach dem vorhergehenden Anspruch, **dadurch gekennzeichnet, dass** der amorphe Polyester aufgebaut ist aus Adipinsäure/Isophthalsäure im Verhältnis von 0,5:1 bis 2:1 und mindestens einem Alkandiol mit 4 bis 8 C-Atomen.

9. Schutzfolie nach einem der vorhergehenden Ansprüche, **dadurch gekennzeichnet, dass** das Polyurethan der Polyurethandispersion 10 bis 80 Gew.% an mindestens einem amorphen Polyesterdiol mit einem Molekulargewicht von über 500 und bis zu 4000 g/mol enthält und das amorphe Polyesterdiol aufgebaut ist aus einem Gemisch aus mindestens einer aliphatischen Dicarbonsäure mit 3 bis 10, vorzugsweise 4 bis 8 C-Atomen und mindestens einer aromatischen Dicarbonsäure im Verhältnis von 0,5:1 bis 2:1 und mindestens einem Alkandiol mit 2 bis 10, vorzugsweise 4 bis 8 C-Atomen.

10. Schutzfolie nach einem der vorhergehenden Ansprüche, **dadurch gekennzeichnet, dass** das Polyurethan der Polyurethandispersion mit mindestens einem Polyamin kettenverlängert ist.

11. Schutzfolie nach einem der vorhergehenden Ansprüche, **dadurch gekennzeichnet, dass** das strahlungsvernetzbare Poly(meth)acrylat durch Bestrahlung mit UV-Licht vernetzbar ist und der Fotoinitiator in Form eines ethylenisch ungesättigten, copolymerisierbaren Fotoinitiators in einer Menge von größer oder gleich 0,5 Gew.%, vorzugsweise größer oder gleich 1 Gew.% und bis zu 4 Gew.% in das strahlungsvernetzbare Poly(meth)acrylat copolymerisiert ist.

12. Schutzfolie nach einem der vorhergehenden Ansprüche, **dadurch gekennzeichnet, dass** das strahlungsvernetzbare Poly(meth)acrylat zu mindestens 60 Gew.% aus C4- bis C10-Alkyl(meth)acrylaten, vorzugsweise ausgewählt aus n-Butylacrylat und 2-Ethylhexylacrylat, gebildet ist.

13. Schutzfolie nach einem der vorhergehenden Ansprüche, **dadurch gekennzeichnet, dass** das strahlungsvernetzbare Poly(meth)acrylat zu 0,1 bis 30 Gew.%, vorzugsweise zu 1 bis 15 Gew.%, aus dem mindestens einen Monomer, welches mindestens eine polare Gruppe aufweist, gebildet ist.

14. Schutzfolie nach einem der vorhergehenden Ansprüche, **dadurch gekennzeichnet, dass** der Schmelzklebstoff mindestens ein strahlungsvernetzbares Poly(meth)acrylat enthält, wobei das strahlungsvernetzbare Poly(meth)acrylat gebildet ist aus

(a1) zu mindestens 60 Gew.% aus mindestens einem Acrylat, welches ausgewählt ist aus der Gruppe bestehend aus n-Butylacrylat, n-Hexylacrylat, 2-Ethyl-hexylacrylat, Propylheptylacrylat und deren Mischungen,
(a2) zu 1 bis 5 Gew.% aus mindestens einem Monomeren mit polaren Gruppen, wobei die polaren Gruppen ausgewählt sind aus Carbonsäuregruppen, Carbonsäureamidgruppen, Pyrrolidongruppen, Urethangruppen

und Harnstoffgruppen,
(a3) zu 0,5 bis 4 Gew.% aus mindestens einem ethylenisch ungesättigten, copolymerisierbaren Fotoinitiator, und
(a4) zu 0 bis 25 Gew.% aus mindestens einem weiteren, von den Monomeren (a1) bis (a3) verschiedenen Monomer.

**15.** Schutzfolie nach einem der vorhergehenden Ansprüche, **dadurch gekennzeichnet, dass** die Auftragsmenge des Haftklebstoffs wenigstens 2 $g/m^2$ beträgt.

**16.** Schutzfolie nach einem der vorhergehenden Ansprüche, **dadurch gekennzeichnet, dass** die Ablösung von einem Substrat durch Adhäsionsbruch der strahlungsvernetzten Klebstoffschicht erfolgt, wobei die Klebstoffschicht sich vom Substrat löst und vollständig auf dem Polyolefinträgermaterial verbleibt.

**17.** Schutzfolie nach einem der vorhergehenden Ansprüche, **dadurch gekennzeichnet, dass** die Kraft zum Abziehen der Schutzfolie von gebürstetem Stahl nicht mehr als 5 N/25 mm bei 23°C beträgt, gemessen wie in den Beispielen angegeben.

**18.** Verfahren zur Herstellung von Schutzfolien, wobei

(1) ein Polyolefinträgermaterial, dessen zu beschichtende Oberfläche vorbehandelt ist, z.B. durch Coronabehandlung oder Plasmabehandlung, mit mindestens einem Primer vorbeschichtet wird, wobei der Primer ausgewählt ist aus Polyurethandispersionen,
(2) auf die Primerschicht eine Haftklebstoffschicht aufgebracht wird, wobei die Haftklebstoffschicht gebildet ist durch Strahlungsvernetzung eines strahlungsvernetzbaren Schmelzklebstoffs und wobei der strahlungsvernetzbare Schmelzklebstoff mindestens ein Poly(meth)acrylat enthält, welches gebildet ist aus

(i) mindestens 50 Gew.% C1- bis C18-Alkyl(meth)acrylaten und
(ii) mindestens einem ethylenisch ungesättigten Monomer, welches mindestens eine polare Gruppe aufweist, wobei die polare Gruppe ausgewählt ist aus Carbonsäuregruppen, Carbonsäureanhydridgruppen, Hydroxygruppen, Amidgruppen, Urethangruppen, Harnstoffgruppen, Piperidinylgruppen, Piperazinylgruppen, Morpholinylgruppen, Imidazoylgruppen, Ureidogruppen, Pyrrolidongruppen und Kombinationen von zwei oder mehr der genannten Gruppen;

und wobei der strahlungsvernetzbare Schmelzklebstoff mindestens einen Fotoinitiator enthält und der Fotoinitiator als nicht an das Poly(meth)acrylat gebundenes Additiv vorliegt und/oder der Fotoinitiator in das Poly(meth)acrylat einpolymerisiert ist.

## Claims

**1.** A protection film comprising

(a) a polyolefin carrier material whose surface to be coated has been pretreated, for example by corona treatment or plasma treatment,
(b) a precoating of the polyolefin carrier material with at least one primer selected from aqueous polyurethane dispersions; and
(c) a pressure-sensitive adhesive layer, wherein the pressure-sensitive adhesive layer is formed by radiation crosslinking of a radiation-crosslinkable hotmelt adhesive and wherein the radiation-crosslinkable hotmelt adhesive comprises at least one poly(meth)acrylate formed from

(i) at least 50% by weight of C1- to C18-alkyl (meth)acrylates and
(ii) at least one ethylenically unsaturated monomer which comprises at least one polar group, wherein the polar group is selected from carboxylic acid groups, carboxylic anhydride groups, hydroxyl groups, amide groups, urethane groups, urea groups, piperidinyl groups, piperazinyl groups, morpholinyl groups, imidazoyl groups, ureido groups, pyrrolidone groups and combinations of two or more of the recited groups;

and wherein the radiation-crosslinkable hotmelt adhesive comprises at least one photoinitiator and the photoinitiator is in the form of an additive not bonded to the poly(meth)acrylate and/or the photoinitiator is incorporated into the poly(meth)acrylate by polymerization.

**2.** The protection film according to the preceding claim, wherein before crosslinking the radiation-crosslinkable poly(meth)acrylate has a glass transition temperature of not more than 10°C, preferably of -60°C to +10°C, measured by differential scanning calorimetry according to ASTM D 3418-08 as a so-called midpoint temperature upon evaluation of the second heating curve at a heating rate of 20°C/min.

**3.** The protection film according to either of the preceding claims, wherein the poly(meth)acrylate of the hotmelt adhesive has a K value of at least 30, preferably of 30 to 80.

**4.** The protection film according to any of the preceding claims, wherein the carrier material is selected from polyethylene and polypropylene.

**5.** The protection film according to any of the preceding claims, wherein the content of anionic or potentially anionic groups in the polyurethane is 30 to 1000 mmol/kg of polyurethane.

**6.** The protection film according to any of the preceding claims, wherein the polyurethane of the polyurethane dispersion is formed using at least one amorphous polymeric polyol, preferably at least one amorphous polyester polyol.

**7.** The protection film according to the preceding claim, wherein the amorphous polyester diol is constructed from a mixture of at least one aliphatic dicarboxylic acid having 3 to 10, preferably 4 to 8, carbon atoms and at least one aromatic dicarboxylic acid in a ratio of 0.5:1 to 2:1 and at least one alkanediol having 2 to 10, preferably 4 to 8, carbon atoms.

**8.** The protection film according to the preceding claim, wherein the amorphous polyester is constructed from adipic acid/isophthalic acid in a ratio of 0.5:1 to 2:1 and at least one alkanediol having 4 to 8 carbon atoms.

**9.** The protection film according to any of the preceding claims, wherein the polyurethane of the polyurethane dispersion comprises 10% to 80% by weight of at least one amorphous polyester diol having a molecular weight of more than 500 and up to 4000 g/mol and the amorphous polyester diol is composed of a mixture of at least one aliphatic dicarboxylic acid having 3 to 10, preferably 4 to 8, carbon atoms and at least one aromatic dicarboxylic acid in a ratio of 0.5:1 to 2:1 and at least one alkanediol having 2 to 10, preferably 4 to 8, carbon atoms.

**10.** The protection film according to any of the preceding claims, wherein the polyurethane of the polyurethane dispersion is chain-extended with at least one polyamine.

**11.** The protection film according to any of the preceding claims, wherein the radiation-crosslinkable poly(meth)acrylate is crosslinkable by irradiation with UV light and the photoinitiator is copolymerized into the radiation-crosslinkable poly(meth)acrylate in the form of an ethylenically unsaturated, copolymerizable photoinitiator in an amount of not less than 0.5% by weight, preferably not less than 1% by weight and up to 4% by weight.

**12.** The protection film according to any of the preceding claims, wherein the radiation-crosslinkable poly(meth)acrylate is formed to an extent of at least 60% by weight from C4- to C10-alkyl (meth)acrylates, preferably selected from n-butyl acrylate and 2-ethylhexyl acrylate.

**13.** The protection film according to any of the preceding claims, wherein the radiation-crosslinkable poly(meth)acrylate is formed to an extent of 0.1% to 30% by weight, preferably to an extent of 1% to 15% by weight, from the at least one monomer which comprises at least one polar group.

**14.** The protection film according to any of the preceding claims, wherein the hotmelt adhesive comprises at least one radiation-crosslinkable poly(meth)acrylate, wherein the radiation-crosslinkable poly(meth)acrylate is formed from

(a1) at least 60% by weight of at least one acrylate selected from the group consisting of n-butyl acrylate, n-hexyl acrylate, 2-ethylhexyl acrylate, propylheptyl acrylate and mixtures thereof,
(a2) 1% to 5% by weight of at least one monomer having polar groups, wherein the polar groups are selected from carboxylic acid groups, carboxamide groups, pyrrolidone groups, urethane groups and urea groups,
(a3) 0.5% to 4% by weight of at least one ethylenically unsaturated, copolymerizable photoinitiator, and
(a4) 0% to 25% by weight of at least one further monomer distinct from the monomers (a1) to (a3).

**15.** The protection film according to any of the preceding claims, wherein the application rate of the pressure-sensitive

adhesive is at least 2 $g/m^2$.

**16.** The protection film according to any of the preceding claims, wherein the detachment from a substrate takes place by adhesion failure of the radiation-crosslinked adhesive layer, wherein the adhesive layer detaches from the substrate and remains entirely on the polyolefin carrier material.

**17.** The protection film according to any of the preceding claims, wherein the force for removal of the protection film from brushed steel is not more than 5 N/25 mm at 23°C, measured as specified in the examples.

**18.** A process for producing protection films, wherein

(1) a polyolefin carrier material whose surface to be coated has been pretreated, for example by corona treatment or plasma treatment, is precoated with at least one primer, wherein the primer is selected from polyurethane dispersions,
(2) a pressure-sensitive adhesive layer is applied to the primer layer, wherein the pressure-sensitive adhesive layer is formed by radiation crosslinking of a radiation-crosslinkable hotmelt adhesive and wherein the radiation-crosslinkable hotmelt adhesive comprises at least one poly(meth)acrylate formed from

(i) at least 50% by weight of C1- to C18-alkyl (meth)acrylates and
(ii) at least one ethylenically unsaturated monomer which comprises at least one polar group, wherein the polar group is selected from carboxylic acid groups, carboxylic anhydride groups, hydroxyl groups, amide groups, urethane groups, urea groups, piperidinyl groups, piperazinyl groups, morpholinyl groups, imidazoyl groups, ureido groups, pyrrolidone groups and combinations of two or more of the recited groups;

and wherein the radiation-crosslinkable hotmelt adhesive comprises at least one photoinitiator and the photoinitiator is in the form of an additive not bonded to the poly(meth)acrylate and/or the photoinitiator is incorporated into the poly(meth)acrylate by polymerization.

## Revendications

**1.** Film protecteur, comprenant

(a) une matière de support polyoléfinique, dont la surface à revêtir est prétraitée, par exemple par décharge corona ou traitement par plasma,
(b) un pré-revêtement de la matière de support polyoléfinique avec au moins un primaire, choisi parmi des dispersions aqueuses de polyuréthane ; et
(c) une couche d'autoadhésif, la couche d'autoadhésif étant formée par réticulation par irradiation d'un adhésif fusible réticulable par irradiation et l'adhésif fusible réticulable par irradiation contenant au moins un poly(méth)acrylate qui est constitué

(i) d'au moins 50 % en poids de (méth)acrylates d'alkyle en C1 à C18 et
(ii) d'au moins un monomère à insaturation éthylénique qui comporte au moins un groupe polaire, le groupe polaire étant choisi parmi les groupes acide carboxylique, les groupes anhydride d'acide carboxylique, les groupes hydroxy, les groupes amido, les groupes uréthane, les groupes urée, les groupes pipéridinyle, les groupes pipérazinyle, les groupes morpholinyle, les groupes imidazoyle, les groupes uréido, les groupes pyrrolidone et des associations de deux ou plus de deux des groupes cités ;

et l'adhésif fusible réticulable par irradiation contenant au moins un photoamorceur et le photoamorceur étant présent en tant qu'additif non lié au poly(méth)acrylate et/ou le photoamorceur étant incorporé par polymérisation dans le poly(méth)acrylate.

**2.** Film protecteur selon la revendication précédente, **caractérisé en ce que** le poly(méth)acrylate réticulable par irradiation présente avant la réticulation une température de transition vitreuse inférieure ou égale à 10 °C, de préférence de -60 à +10 °C, mesurée par Differential Scanning Calorimetrie selon ASTM D 3418-08 en tant que dénommée midpoint température lors de l'évaluation de la deuxième courbe de chauffage à une vitesse de chauffage de 20 °C/min.

3. Film protecteur selon l'une quelconque des revendications précédentes, **caractérisé en ce que** le poly(méth)acrylate de l'adhésif fusible présente un isndice K d'au moins 30, de préférence de 30 à 80.

4. Film protecteur selon l'une quelconque des revendications précédentes, **caractérisé en ce que** la matière de support est choisie parmi le polyéthylène et le polypropylène.

5. Film protecteur selon l'une quelconque des revendications précédentes, **caractérisé en ce que** la teneur en groupes anioniques ou potentiellement anioniques du polyuréthane vaut 30 à 1 000 mmoles/kg de polyuréthane.

6. Film protecteur selon l'une quelconque des revendications précédentes, **caractérisé en ce que** le polyuréthane de la dispersion de polyuréthane est formé avec utilisation d'au moins un polyol polymère amorphe, de préférence d'au moins un polyesterpolyol amorphe.

7. Film protecteur selon la revendication précédente, **caractérisé en ce que** le polyesterdiol amorphe est constitué à partir d'un mélange d'au moins un acide dicarboxylique aliphatique ayant de 3 à 10, de préférence 4 à 8 atomes de carbone et d'au moins un acide dicarboxylique aromatique en un rapport de 0,5:1 à 2:1 et d'au moins un alcanediol ayant de 2 à 10, de préférence 4 à 8 atomes de carbone.

8. Film protecteur selon la revendication précédente, **caractérisé en ce que** le polyester amorphe est constitué à partir d'acide adipique/acide isophtalique en un rapport de 0,5:1 à 2:1 et d'au moins un alcanediol ayant de 4 à 8 atomes de carbone.

9. Film protecteur selon l'une quelconque des revendications précédentes, **caractérisé en ce que** le polyuréthane de la dispersion de polyuréthane contient de 10 à 80 % en poids d'au moins un polyesterdiol amorphe ayant une masse moléculaire de plus de 500 et jusqu'à 4 000 g/mole et le polyesterdiol amorphe est constitué à partir d'un mélange d'au moins un acide dicarboxylique aliphatique ayant de 3 à 10, de préférence 4 à 8 atomes de carbone et d'au moins un acide dicarboxylique aromatique en un rapport de 0,5:1 à 2:1 et d'au moins un alcanediol ayant de 2 à 10, de préférence 4 à 8 atomes de carbone.

10. Film protecteur selon l'une quelconque des revendications précédentes, **caractérisé en ce que** le polyuréthane de la dispersion de polyuréthane a une extension de chaîne par au moins une polyamine.

11. Film protecteur selon l'une quelconque des revendications précédentes, **caractérisé en ce que** le poly(méth)acrylate réticulable par irradiation est réticulable par irradiation avec de la lumière UV et le photoamorceur sous forme d'un photoamorceur copolymérisable, à insaturation éthylénique, est copolymérisé dans le poly(méth)acrylate réticulable par irradiation, en une quantité supérieure ou égale à 0,5 % en poids, de préférence supérieure ou égale à 1 % en poids et de jusqu'à 4 % en poids.

12. Film protecteur selon l'une quelconque des revendications précédentes, **caractérisé en ce que** le poly(méth)acrylate réticulable par irradiation est constitué à raison d'au moins 60 % en poids de (méth)acrylates d'alkyle en C4 à C10, choisis de préférence parmi l'acrylate de n-butyle et l'acrylate de 2-éthylhexyle.

13. Film protecteur selon l'une quelconque des revendications précédentes, **caractérisé en ce que** le poly(méth)acrylate réticulable par irradiation est constitué à raison de 0,1 à 30 % en poids, de préférence à raison de 1 à 15 % en poids, dudit au moins un monomère qui comporte au moins un groupe polaire.

14. Film protecteur selon l'une quelconque des revendications précédentes, **caractérisé en ce que** l'adhésif fusible contient au moins un poly(méth)acrylate réticulable par irradiation, le poly(méth)acrylate réticulable par irradiation étant constitué

(a1) à raison d'au moins 60 % en poids, d'au moins un acrylate qui est choisi dans le groupe constitué par l'acrylate de n-butyle, l'acrylate de n-hexyle, l'acrylate de 2-éthyl-hexyle, l'acrylate de propylheptyle et des mélanges de ceux-ci,
(a2) à raison de 1 bis 5 % en poids, d'au moins un monomère comportant des groupes polaires, les groupes polaires étant choisis parmi les groupes acide carboxylique, les groupes amide d'acide carboxylique, les groupes pyrrolidone, les groupes uréthane et les groupes urée,
(a3) à raison de 0,5 à 4 % en poids, d"au moins un photoamorceur copolymérisable, à insaturation éthylénique, et
(a4) à raison de 0 à 25 % en poids, d'au moins un monomère supplémentaire, différent des monomères (a1)

à (a3).

**15.** Film protecteur selon l'une quelconque des revendications précédentes, **caractérisé en ce que** la quantité appliquée de l'autoadhésif est d'au moins 2 g/$m^2$.

**16.** Film protecteur selon l'une quelconque des revendications précédentes, **caractérisé en ce que** le détachement d'avec un substrat s'effectue par rupture d'adhérence de la couche d'adhésif réticulée par irradiation, la couche d'adhésif se détachant du substrat et restant entièrement sur la matière de support polyoléfinique.

**17.** Film protecteur selon l'une quelconque des revendications précédentes, **caractérisé en ce que** la force requise pour enlever le film protecteur d'avec de l'acier brossé n'excède pas 5 N/25 mm à 23 °C, mesurée comme indiqué dans les exemples.

**18.** Procédé pour la fabrication de films protecteurs, dans lequel

(1) une matière de support polyoléfinique, dont la surface à revêtir est prétraitée, par exemple par décharge corona ou traitement par plasma, est pré-revêtue avec au moins un primaire, le primaire étant choisi parmi des dispersions de polyuréthane,
(2) une couche d'autoadhésif est appliquée sur la couche de primaire, la couche d'autoadhésif étant formée par réticulation par irradiation d'un adhésif fusible réticulable par irradiation et l'adhésif fusible réticulable par irradiation contenant au moins un poly(méth)acrylate qui est constitué

(i) d'au moins 50 % en poids de (méth)acrylates d'alkyle en C1 à C18 et
(ii) d'au moins un monomère à insaturation éthylénique qui comporte au moins un groupe polaire, le groupe polaire étant choisi parmi les groupes acide carboxylique, les groupes anhydride d'acide carboxylique, les groupes hydroxy, les groupes amido, les groupes uréthane, les groupes urée, les groupes pipéridinyle, les groupes pipérazinyle, les groupes morpholinyle, les groupes imidazoyle, les groupes uréido, les groupes pyrrolidone et des associations de deux ou plus de deux des groupes cités ;

et l'adhésif fusible réticulable par irradiation contenant au moins un photoamorceur et le photoamorceur étant présent en tant qu'additif non lié au poly(méth)acrylate et/ou le photoamorceur étant incorporé par polymérisation dans le poly(méth)acrylate.

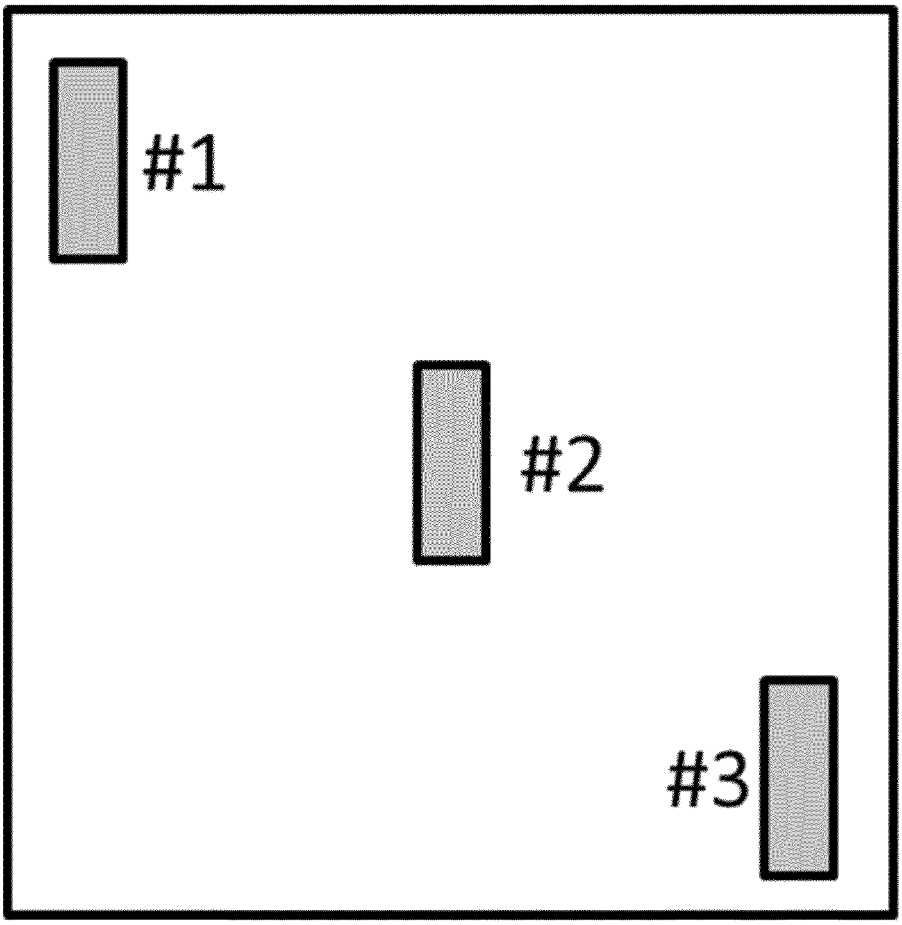


Figur 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004058070
- EP 246848 A
- EP 377191 A
- EP 445641 A
- EP 376054 A
- WO 0123488 A
- WO 01023488 A
- DE 102012218335
- EP 1213306 A
- EP 622378 A
- US 3905929 A
- US 3920598 A
- DE 1495745 A
- US 3412054 A
- DE 3911827 A
- DE 2034479 A
- DE 1954090 B
- CA 1129128 A
- US 4269748 A
- US 4292226 A
- US 4192937 A


### In der Beschreibung aufgeführte Nicht-Patentliteratur


- **T.G. FOX.** *Bull. Am. Phys. Soc.,* 1956, vol. 1, 123
- Ullmann’s Encyclopädie der technischen Chemie. Verlag Chemie, 1980, vol. 4, 18
- Ullmann’s Ecyclopedia of Industrial Chemistry. VCH Weinheim, 1992, vol. A21, 169
- **J. BRANDRUP ; E.H. IMMERGUT.** Polymer Handbook. J. Wiley, 1966
- **J. BRANDRUP, E.H. IMMERGUT.** Polymer Handbook. J. Wiley, 1975
- **J. BRANDRUP, E.H. IMMERGUT.** Polymer Handbook. J. Wiley, 1989
- Ullmanns Enzyklopädie der technischen Chemie. vol. 4, 311-313